# EUROPEAN PATENT APPLICATION

(11) **EP 4 407 977 A1**
(43) Date of publication of application: **31.07.2024**
(21) Application number: 22872402.7
(22) Date of filing: 11.03.2022
(51) Int. Cl.: H04N 5/275

(54) **INFORMATION PROCESSING APPARATUS, IMAGE PROCESSING METHOD, AND PROGRAM**

(30) Priority: 21.09.2021 JP 2021153299
(71) Applicant: Sony Group Corporation, Tokyo 108-0075 (JP)
(72) Inventor: SUGANO, Hisako, Tokyo 108-0075 (JP)
(74) Representative: D Young & Co LLP
(86) International application number: PCT/JP2022/010992
(87) International publication number: WO 2023/047643

(57) **Abstract**

An information processing device includes a video processing unit that performs, on a captured video obtained by capturing a display video of a display device and an object, video processing of a display video area determined using mask information for separating a display video and an object video in the captured video, or video processing of an object video area determined using the mask information.

## Description

### TECHNICAL FIELD

The present technology relates to a video processing technology implemented as an information processing device, a video processing method, and a program.

### BACKGROUND ART

As an imaging method for producing video content such as a movie, a technique is known in which a performer performs acting with what is called a green back and then a background video is synthesized.

Furthermore, in recent years, instead of green back shooting, an imaging system has been developed in which a background video is displayed on a display device in a studio provided with a large display device, and a performer performs in front of the background video, to thereby enable imaging of the performer and the background can be imaged, and this imaging system is known as what is called a virtual production, in-camera VFX, or LED wall virtual production.

Patent Document 1 below discloses a technology of a system that images a performer acting in front of a background video.

In addition, Patent Document 2 below discloses a technology of disposing an optical member having a film form or the like in order to prevent moire in a case where a large display device is imaged.

### CITATION LIST

### PATENT DOCUMENT

Patent Document 1: US Patent Application Publication No. 2020/0145644 A
Patent Document 2: JP 2014-202816 A

### SUMMARY OF THE INVENTION

### PROBLEMS TO BE SOLVED BY THE INVENTION

The background video is displayed on a large display device, and then the performer and the background video are captured with a camera, so that there is no need to prepare a background video to be separately synthesized, and the performer and staffs can visually understand the scene and determine the performance and whether the performance is good or bad, or the like, which are more advantageous than green back shooting. However, when the displayed background video is further captured by the camera, various artifacts such as moire may occur in the background video portion in the captured video. That is, an unintended influence may occur on the video.

Therefore, the present disclosure proposes a video processing technology capable of coping with an influence occurring on a captured video in a case where a video displayed on a display device and an object are simultaneously imaged.

### SOLUTIONS TO PROBLEMS

An information processing device according to the present technology includes a video processing unit that performs, on a captured video obtained by capturing a display video of a display device and an object, video processing of a display video area determined using mask information for separating a display video and an object video in the captured video, or video processing of an object video area determined using the mask information.

For example, in a case where a background video or the like is displayed on the display device at the time of imaging, and a real object such as a person or an object is captured together with the display video, the display video and the object of the display device appear in the captured video. In this captured video, a display video area in which a display video is reflected and an object video area in which an object is reflected are divided by using the mask information, and video processing is individually performed.

### BRIEF DESCRIPTION OF DRAWINGS

Fig. 1 is an explanatory diagram of an imaging system of an embodiment of the present technology.
Fig. 2 is an explanatory diagram of a background video according to a camera position of the imaging system of the embodiment.
Fig. 3 is an explanatory diagram of a background video according to a camera position of the imaging system of the embodiment.
Fig. 4 is an explanatory diagram of a video content producing step of the embodiment.
Fig. 5 is a block diagram of the imaging system of the embodiment.
Fig. 6 is a flowchart of background video generation of the imaging system of the embodiment.
Fig. 7 is a block diagram of the imaging system using a plurality of cameras of the embodiment.
Fig. 8 is a block diagram of an information processing device of the embodiment.
Fig. 9 is an explanatory diagram of moire in a case where a background video is captured.
Fig. 10 is an explanatory diagram of a mask of an embodiment.
Fig. 11 is an explanatory diagram of a background area and a foreground area determined by the mask of the embodiment.
Fig. 12 is an explanatory diagram of a processed captured video of the embodiment.
Fig. 13 is an explanatory diagram of an SWIR camera.
Fig. 14 is an explanatory diagram of a camera of the embodiment.
Fig. 15 is an explanatory diagram of another example of the camera of the embodiment.
Fig. 16 is a flowchart of video processing of the first embodiment.
Fig. 17 is a flowchart of moire handling processing of the embodiment.
Fig. 18 is a flowchart of the moire handling processing of the embodiment.
Fig. 19 is a flowchart of the moire handling processing of the embodiment.
Fig. 20 is a flowchart of video processing of the second embodiment.
Fig. 21 is an explanatory diagram of bounding.
Fig. 22 is an explanatory diagram of a defect of an image.
Fig. 23 is a flowchart of video processing according to the third embodiment.
Fig. 24 is a flowchart of processing at the time of imaging according to the fourth embodiment.
Fig. 25 is a flowchart of video processing after imaging according to the fourth embodiment.
Fig. 26 is an explanatory diagram of a configuration example of a display panel of a background video of the embodiment.

### MODE FOR CARRYING OUT THE INVENTION

Hereinafter, embodiments will be described in the following order.
<1. Imaging system and content production>
<2. Configuration of information processing device>
<3. Video processing applicable to virtual production>
<4. First embodiment>
<5. Second embodiment>
<6. Third embodiment>
<7. Fourth embodiment>
<8. Configuration example of display panel for background video>
<9. Summary and modification examples>

Note that, in the present disclosure, "video" or "image" includes both a still image and a moving image. In addition, "video" refers not only to a state in which video data is displayed on the display, but also to video data in a state in which video data is not displayed on the display.

### <1. Imaging system and video content production>

An imaging system to which the technology of the present disclosure can be applied and production of video content will be described.

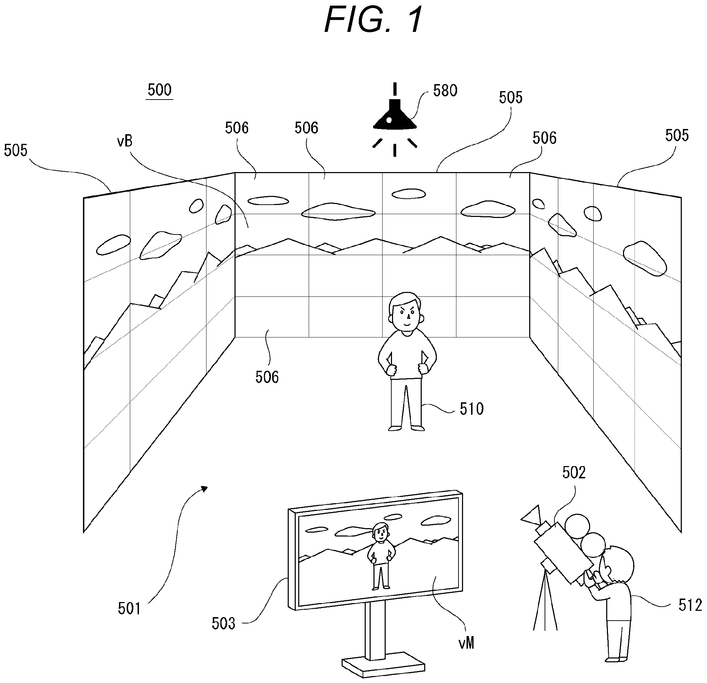

Fig. 1 schematically illustrates an imaging system 500. The imaging system 500 is a system that performs imaging as virtual production, and a part of equipment disposed in an imaging studio is illustrated in the drawing.

In the imaging studio, a performance area 501 in which a performer 510 performs performance such as acting is provided. A large display device is disposed on at least a back surface, left and right side surfaces, and an upper surface of the performance area 501. Although the device type of the display device is not limited, the drawing illustrates an example in which an LED wall 505 is used as an example of a large display device.

One LED wall 505 forms a large panel by vertically and horizontally connecting and disposing a plurality of LED panels 506. The size of the LED wall 505 is not particularly limited, but is only necessary to be a size that is necessary or sufficient as a size for displaying the background when the performer 510 is imaged.

A necessary number of lights 580 are disposed at necessary positions such as above or on the side of the performance area 501 to illuminate the performance area 501.

In the vicinity of the performance area 501, for example, a camera 502 for imaging a movie or other video content is disposed. The camera operator 512 can move the position of the camera 502, and can perform an operation of an imaging direction, an angle of view, or the like. Of course, it is also conceivable that movement, angle of view operation, or the like of the camera 502 is performed by remote control. Furthermore, the camera 502 may automatically or autonomously move or change the angle of view. For this reason, the camera 502 may be mounted on a camera platform or a mobile body.

The camera 502 collectively captures the performer 510 in the performance area 501 and the video displayed on the LED wall 505. For example, by displaying a scene as a background video vB on the LED wall 505, it is possible to capture a video similar to that in a case where the performer 510 actually exists and performs at the place of the scene.

An output monitor 503 is disposed near the performance area 501. The video captured by the camera 502 is displayed on the output monitor 503 in real time as a monitor video vM. Thus, a director and a staff who produce video content can confirm the captured video.

As described above, the imaging system 500 that images the performance of the performer 510 in the background of the LED wall 505 in the imaging studio has various advantages as compared with the green back shooting.

For example, in a case of the green back shooting, it is difficult for the performer to imagine the background and the situation of the scene, which may affect the performance. On the other hand, by displaying the background video vB, the performer 510 can easily perform, and the quality of performance is improved. Furthermore, it is easy for the director and other staff members to determine whether or not the performance of the performer 510 matches the background or the situation of the scene.

Furthermore, post-production after imaging is more efficient than in the case of the green back shooting. This is because what is called a chroma key composition may be unnecessary or color correction or reflection composition may be unnecessary. Furthermore, even in a case where the chroma key composition is required at the time of imaging, the background screen does not need to be added, which is also helpful to improve efficiency.

In the case of the green back shooting, the color of green increases on the performer's body, dress, and objects, and thus correction thereof is necessary. Furthermore, in the case of the green back shooting, in a case where there is an object in which a surrounding scene is reflected, such as glass, a mirror, or a snowdome, it is necessary to generate and synthesize an image of the reflection, but this is troublesome work.

On the other hand, in a case of imaging by the imaging system 500 in Fig. 1, the hue of the green does not increase, and thus the correction is unnecessary. In addition, by displaying the background video vB, the reflection on the actual article such as glass is naturally obtained and captured, and thus, it is also unnecessary to synthesize the reflection video.

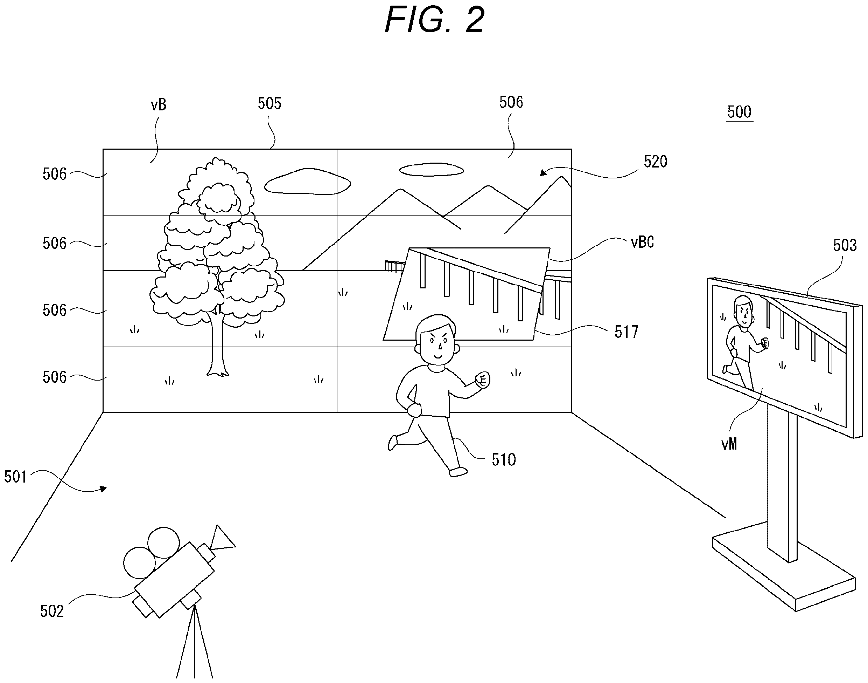

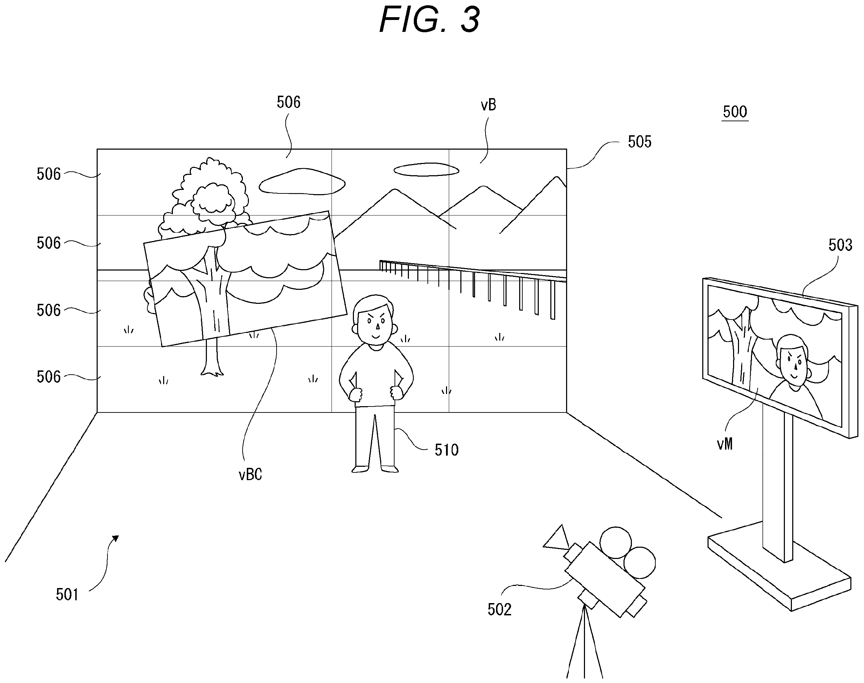

Here, the background video vB will be described with reference to Figs. 2 and 3. Even if the background video vB is displayed on the LED wall 505 and captured together with the performer 510, the background of the captured video becomes unnatural only by simply displaying the background video vB. This is because a background that is three-dimensional and has depth is actually used as the background video vB in a planar manner.

For example, the camera 502 can capture the performer 510 in the performance area 501 from various directions, and can also perform a zoom operation. The performer 510 also does not stop at one place. Then, the actual appearance of the background of the performer 510 should change according to the position, the imaging direction, the angle of view, and the like of the camera 502, but such a change cannot be obtained in the background video vB as the planar video. Accordingly, the background video vB is changed so that the background is similar to the actual appearance including a parallax.

Fig. 2 illustrates a state in which the camera 502 is imaging the performer 510 from a position on the left side of the drawing, and Fig. 3 illustrates a state in which the camera 502 is imaging the performer 510 from a position on the right side of the drawing. In each drawing, a capturing region video vBC is illustrated in the background video vB.

Note that a portion of the background video vB excluding the capturing region video vBC is referred to as an "outer frustum", and the capturing region video vBC is referred to as an "inner frustum".

The background video vB described here indicates the entire video displayed as the background including the capturing region video vBC (inner frustum).

The range of the capturing region video vBC (inner frustum) corresponds to a range actually imaged by the camera 502 in the display surface of the LED wall 505. Then, the capturing region video vBC is a video that is transformed so as to express a scene that is actually viewed when the position of the camera 502 is set as a viewpoint according to the position, the imaging direction, the angle of view, and the like of the camera 502.

Specifically, 3D background data that is a 3D (three dimensions) model as a background is prepared, and the capturing region video vBC is sequentially rendered on the basis of the viewpoint position of the camera 502 with respect to the 3D background data in real time.

Note that the range of the capturing region video vBC is actually a range slightly wider than the range imaged by the camera 502 at that time. This is to prevent the video of the outer frustum from being reflected due to a drawing delay and to avoid the influence of the diffracted light from the video of the outer frustum when the range of imaging is slightly changed by panning, tilting, zooming, or the like of the camera 502.

The video of the capturing region video vBC rendered in real time in this manner is synthesized with the video of the outer frustum. The video of the outer frustum used in the background video vB is rendered in advance on the basis of the 3D background data, and the video is incorporated as the capturing region video vBC rendered in real time into a part of the video of the outer frustum to generate the entire background video vB.

Thus, even when the camera 502 is moved back and forth, or left and right, or a zoom operation is performed, the background of the range imaged together with the performer 510 is imaged as a video corresponding to the viewpoint position change accompanying the actual movement of the camera 502.

As illustrated in Figs. 2 and 3, the monitor video vM including the performer 510 and the background is displayed on the output monitor 503, and this is the captured video. The background of the monitor video vM is the capturing region video vBC. That is, the background included in the captured video is a real-time rendered video.

As described above, in the imaging system 500 of the embodiment, the background video vB including the capturing region video vBC is changed in real time so that not only the background video vB is simply displayed in a planar manner but also a video similar to that in a case of actually imaging on location can be captured.

Note that the processing load of the system is also reduced by rendering only the capturing region video vBC as a range reflected by the camera 502 in real time instead of the entire background video vB displayed on the LED wall 505.

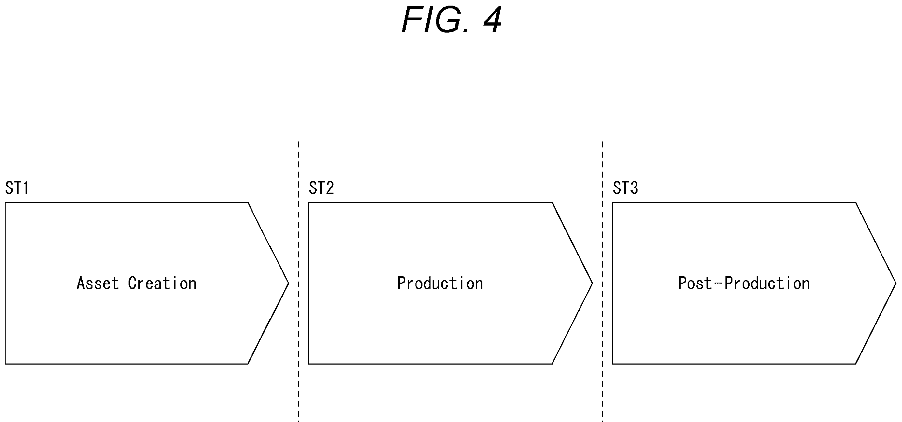

Here, a process of producing a video content as virtual production in which imaging is performed by the imaging system 500 will be described. As illustrated in Fig. 4, the video content production process is roughly divided into three stages. The stages are asset creation ST1, production ST2, and post-production ST3.

The asset creation ST1 is a process of creating 3D background data for displaying the background video vB. As described above, the background video vB is generated by performing rendering in real time using the 3D background data at the time of imaging. For this purpose, 3D background data as a 3D model is produced in advance.

Examples of a method of producing the 3D background data include full computer graphics (CG), point cloud data (Point Cloud) scan, and photogrammetry.

The full CG is a method of producing a 3D model with computer graphics. Among the three methods, the method requires the most man-hours and time, but is preferably used in a case where an unrealistic video, a video that is difficult to capture in practice, or the like is desired to be the background video vB.

The point cloud data scanning is a method of generating a 3D model based on the point cloud data by performing distance measurement from a certain position using, for example, LiDAR, capturing an image of 360 degrees by a camera from the same position, and placing color data captured by the camera on a point measured by the LiDAR. Compared with the full CG, the 3D model can be created in a short time. Furthermore, it is easy to produce a 3D model with higher definition than that of photogrammetry.

Photogrammetry is a photogrammetry technology for analyzing parallax information from two-dimensional images obtained by imaging an object from a plurality of viewpoints to obtain dimensions and shapes. 3D model creation can be performed in a short time.

Note that the point cloud information acquired by the LIDAR may be used in the 3D data generation by the photogrammetry.

In the asset creation ST1, for example, a 3D model to be 3D background data is created using these methods. Of course, the above methods may be used in combination. For example, a part of a 3D model produced by point cloud data scanning or photogrammetry is produced by CG and synthesized.

The production ST2 is a process of performing imaging in the imaging studio as illustrated in Fig. 1. Element technologies in this case include real-time rendering, background display, camera tracking, lighting control, and the like.

The real-time rendering is rendering processing for obtaining the capturing region video vBC at each time point (each frame of the background video vB) as described with reference to Figs. 2 and 3. This is to render the 3D background data created in the asset creation ST1 from a viewpoint corresponding to the position of the camera 502 or the like at each time point.

In this way, the real-time rendering is performed to generate the background video vB of each frame including the capturing region video vBC, and the background video vB is displayed on the LED wall 505.

The camera tracking is performed to obtain imaging information by the camera 502, and tracks position information, an imaging direction, an angle of view, and the like at each time point of the camera 502. By providing the imaging information including these to a rendering engine in association with each frame, real-time rendering according to the viewpoint position or the like of the camera 502 can be executed.

The imaging information is information linked with or associated with a video as metadata.

It is assumed that the imaging information includes position information of the camera 502 at each frame timing, a direction of the camera, an angle of view, a focal length, an f-number (aperture value), a shutter speed, lens information, and the like.

The illumination control is to control the state of illumination in the imaging system 500, and specifically, to control the light amount, emission color, illumination direction, and the like of a light 580. For example, illumination control is performed according to time setting of a scene to be imaged, setting of a place, and the like.

The post-production ST3 indicates various processes performed after imaging. For example, video correction, video adjustment, clip editing, video effect, and the like are performed.

As the video correction, color gamut conversion, color matching between cameras and materials, and the like may be performed.

As the video adjustment, color adjustment, luminance adjustment, contrast adjustment, and the like may be performed.

As the clip editing, cutting of clips, adjustment of order, adjustment of a time length, and the like may be performed.

As a video effect, there is a case where a synthesis of a CG video or a special effect video or the like is performed.

Next, a configuration of the imaging system 500 used in the production ST2 will be described.

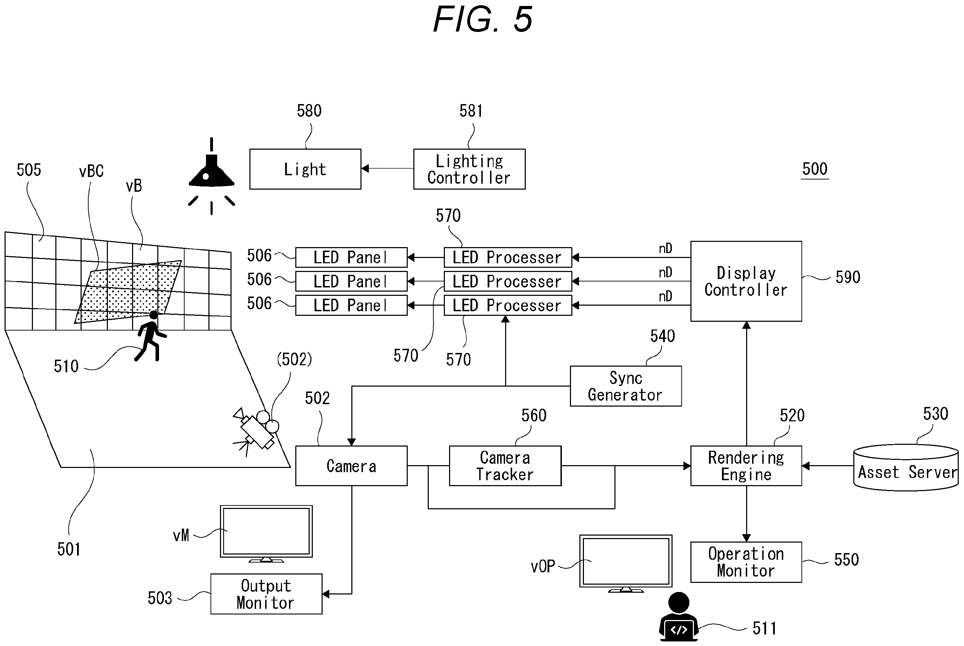

Fig. 5 is a block diagram illustrating a configuration of the imaging system 500 whose outline has been described with reference to Figs. 1, 2, and 3.

The imaging system 500 illustrated in Fig. 5 includes the above-described LED wall 505 including the plurality of LED panels 506, the camera 502, the output monitor 503, and the light 580. As illustrated in Fig. 5, the imaging system 500 further includes a rendering engine 520, an asset server 530, a sync generator 540, an operation monitor 550, a camera tracker 560, LED processors 570, a lighting controller 581, and a display controller 590.

The LED processors 570 are provided corresponding to the LED panels 506, and perform video display driving of the corresponding LED panels 506.

The sync generator 540 generates a synchronization signal for synchronizing frame timings of display videos by the LED panels 506 and a frame timing of imaging by the camera 502, and supplies the synchronization signal to the respective LED processors 570 and the camera 502. However, this does not prevent output from the sync generator 540 from being supplied to the rendering engine 520.

The camera tracker 560 generates imaging information by the camera 502 at each frame timing and supplies the imaging information to the rendering engine 520. For example, the camera tracker 560 detects the position information of the camera 502 relative to the position of the LED wall 505 or a predetermined reference position and the imaging direction of the camera 502 as one of the imaging information, and supplies them to the rendering engine 520.

As a specific detection method by the camera tracker 560, there is a method of randomly disposing a reflector on the ceiling and detecting a position from reflected light of infrared light emitted from the camera 502 side to the reflector. Furthermore, as a detection method, there is also a method of estimating the self-position of the camera 502 by information of a gyro mounted on a platform of the camera 502 or a main body of the camera 502, or image recognition of a captured video of the camera 502.

Furthermore, an angle of view, a focal length, an F value, a shutter speed, lens information, and the like may be supplied from the camera 502 to the rendering engine 520 as the imaging information.

The asset server 530 is a server that can store a 3D model created in the asset creation ST1, that is, 3D background data on a recording medium and read the 3D model as necessary. That is, it functions as a database (DB) of 3D background data.

The rendering engine 520 performs processing of generating the background video vB to be displayed on the LED wall 505. For this reason, the rendering engine 520 reads necessary 3D background data from the asset server 530. Then, the rendering engine 520 generates a video of the outer frustum used in the background video vB as a video obtained by rendering the 3D background data in a form of being viewed from spatial coordinates specified in advance.

Furthermore, as processing for each frame, the rendering engine 520 specifies the viewpoint position and the like with respect to the 3D background data using the imaging information supplied from the camera tracker 560 or the camera 502, and renders the capturing region video vBC (inner frustum).

Moreover, the rendering engine 520 synthesizes the capturing region video vBC rendered for each frame with the outer frustum generated in advance to generate the background video vB as the video data of one frame. Then, the rendering engine 520 transmits the generated video data of one frame to the display controller 590.

The display controller 590 generates divided video signals nD obtained by dividing the video data of one frame into video portions to be displayed on the respective LED panels 506, and transmits the divided video signals nD to the respective LED panels 506. At this time, the display controller 590 may perform calibration according to individual differences of color development or the like, manufacturing errors, and the like between display units.

Note that the display controller 590 may not be provided, and the rendering engine 520 may perform these processes. That is, the rendering engine 520 may generate the divided video signals nD, perform calibration, and transmit the divided video signals nD to the respective LED panels 506.

By the LED processors 570 driving the respective LED panels 506 on the basis of the respective received divided video signals nD, the entire background video vB is displayed on the LED wall 505. The background video vB includes the capturing region video vBC rendered according to the position of the camera 502 or the like at that time.

The camera 502 can capture the performance of the performer 510 including the background video vB displayed on the LED wall 505 in this manner. The video obtained by imaging by the camera 502 is recorded on a recording medium in the camera 502 or an external recording device (not illustrated), and is supplied to the output monitor 503 in real time and displayed as a monitor video vM.

The operation monitor 550 displays an operation image vOP for controlling the rendering engine 520. An engineer 511 can perform necessary settings and operations regarding rendering of the background video vB while viewing the operation image vOP.

The lighting controller 581 controls emission intensity, emission color, irradiation direction, and the like of the light 580. For example, the lighting controller 581 may control the light 580 asynchronously with the rendering engine 520, or may perform control in synchronization with the imaging information and the rendering processing. Therefore, the lighting controller 581 may perform light emission control in accordance with an instruction from the rendering engine 520, a master controller (not illustrated), or the like.

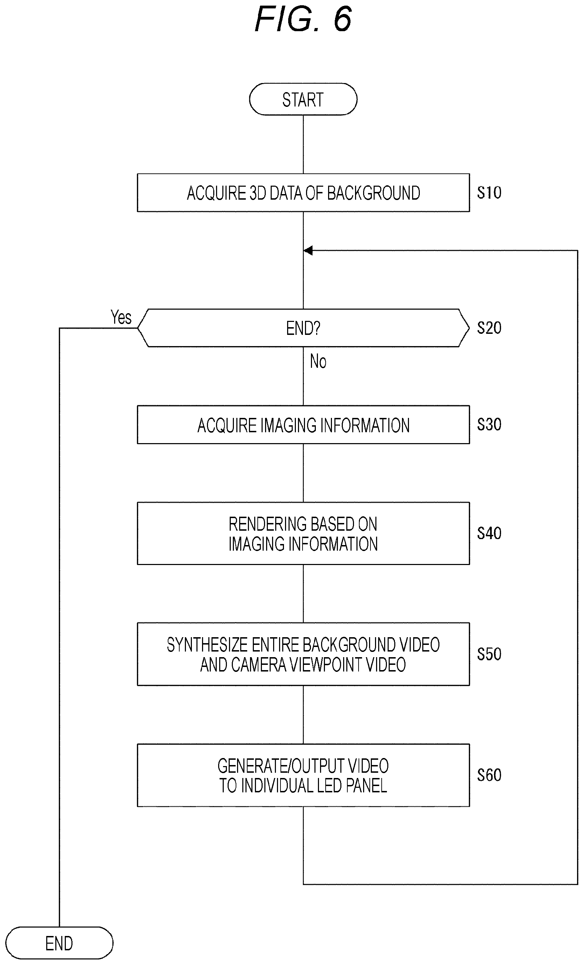

Fig. 6 illustrates a processing example of the rendering engine 520 in the imaging system 500 having such a configuration.

In step S10, the rendering engine 520 reads the 3D background data to be used this time from the asset server 530, and develops the 3D background data in an internal work area.

Then, a video used as the outer frustum is generated.

Thereafter, the rendering engine 520 repeats the processing from step S30 to step S60 at each frame timing of the background video vB until it is determined in step S20 that the display of the background video vB based on the read 3D background data is ended.

In step S30, the rendering engine 520 acquires the imaging information from the camera tracker 560 and the camera 502. Thus, the position and state of the camera 502 to be reflected in the current frame are confirmed.

In step S40, the rendering engine 520 performs rendering on the basis of the imaging information. That is, the viewpoint position with respect to the 3D background data is specified on the basis of the position, the imaging direction, the angle of view, and the like of the camera 502 to be reflected in the current frame, and rendering is performed. At this time, video processing reflecting a focal length, an F value, a shutter speed, lens information, and the like can also be performed. By this rendering, video data as the capturing region video vBC can be obtained.

In step S50, the rendering engine 520 performs processing of synthesizing the outer frustum, which is the entire background video, and the video reflecting the viewpoint position of the camera 502, that is, the capturing region video vBC. For example, the processing is to synthesize a video generated by reflecting the viewpoint of the camera 502 with a video of the entire background rendered at a specific reference viewpoint. Thus, the background video vB of one frame displayed on the LED wall 505, that is, the background video vB including the capturing region video vBC is generated.

The processing in step S60 is performed by the rendering engine 520 or the display controller 590. In step S60, the rendering engine 520 or the display controller 590 generates the divided video signals nD obtained by dividing the background video vB of one frame into videos to be displayed on the individual LED panels 506. Calibration may be performed. Then, the respective divided video signals nD are transmitted to the respective LED processors 570.

By the above processing, the background video vB including the capturing region video vBC captured by the camera 502 is displayed on the LED wall 505 at each frame timing.

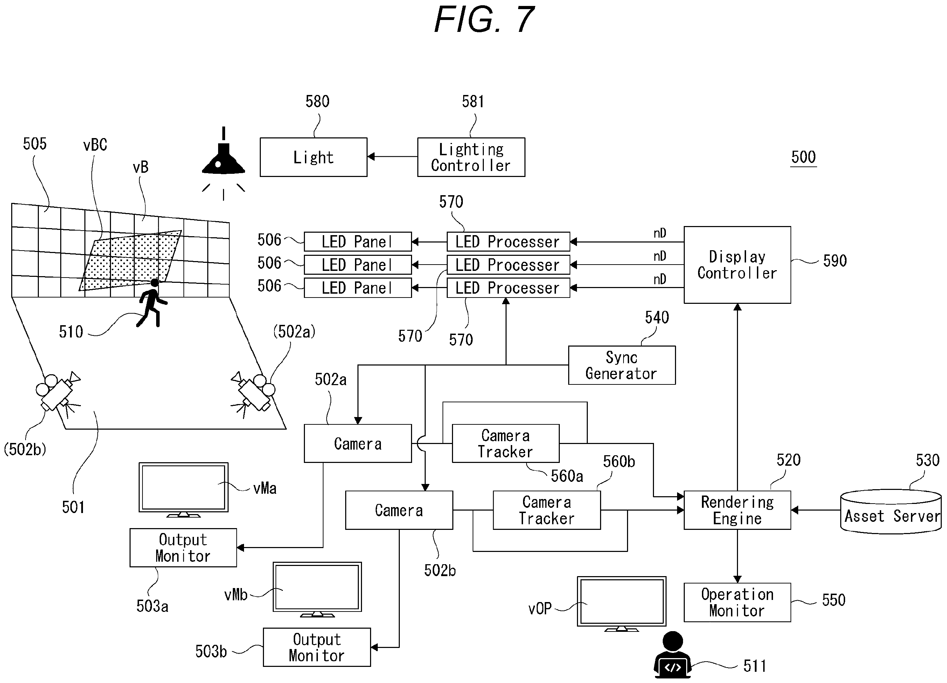

Incidentally, only one camera 502 is illustrated in Fig. 5, but imaging can be performed by a plurality of cameras 502. Fig. 7 illustrates a configuration example in a case where a plurality of cameras 502a and 502b is used. The cameras 502a and 502b can independently perform imaging in the performance area 501. Furthermore, synchronization between the cameras 502a and 502b and the LED processors 570 is maintained by the sync generator 540.

Output monitors 503a and 503b are provided corresponding to the cameras 502a and 502b, and are configured to display the videos captured by the corresponding cameras 502a and 502b as monitor videos vMa and vMb, respectively.

Furthermore, camera trackers 560a and 560b are provided corresponding to the cameras 502a and 502b, respectively, and detect the positions and imaging directions of the corresponding cameras 502a and 502b, respectively. The imaging information from the camera 502a and the camera tracker 560a and the imaging information from the camera 502b and the camera tracker 560b are transmitted to the rendering engine 520.

The rendering engine 520 can perform rendering for obtaining the background video vB of each frame using the imaging information of either the camera 502a side or the camera 502b side.

Note that although Fig. 7 illustrates an example using the two cameras 502a and 502b, it is also possible to perform imaging using three or more cameras 502.

However, in a case where the plurality of cameras 502 is used, there is a circumstance that the capturing region video vBC corresponding to each camera 502 interferes. For example, in the example in which the two cameras 502a and 502b are used as illustrated in Fig. 7, the capturing region video vBC corresponding to the camera 502a is illustrated, but in a case where the video of the camera 502b is used, the capturing region video vBC corresponding to the camera 502b is also necessary. When the capturing region video vBC corresponding to each of the cameras 502a and 502b is simply displayed, they interfere with each other. Therefore, it is necessary to contrive the display of the capturing region video vBC.

### <2. Configuration of information processing device>

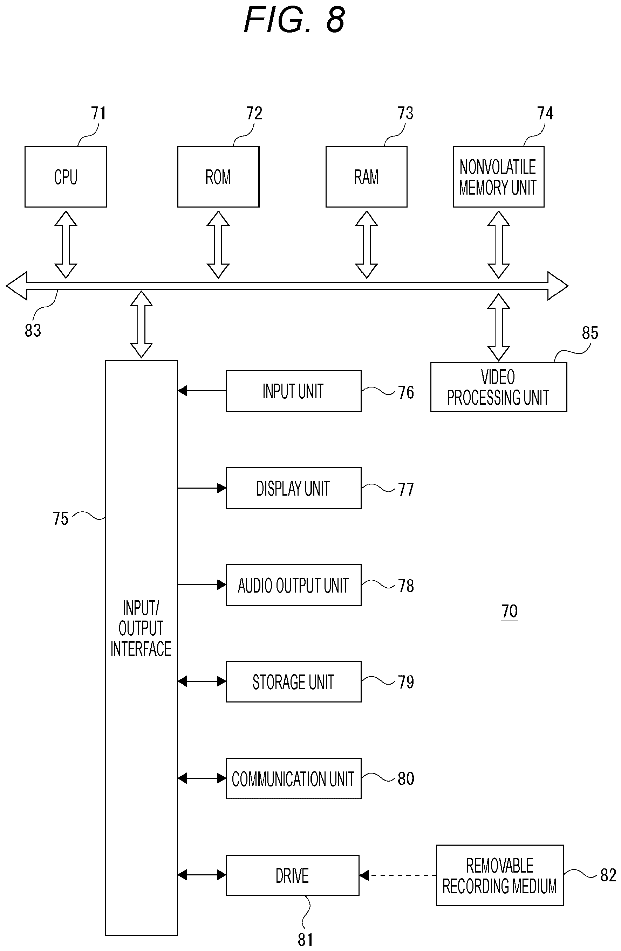

Next, a configuration example of the information processing device 70 that can be used in the asset creation ST1, the production ST2, and the post-production ST3 will be described with reference to Fig. 8.

The information processing device 70 is a device capable of performing information processing, particularly video processing, such as a computer device. Specifically, a personal computer, a workstation, a portable terminal device such as a smartphone and a tablet, a video editing device, and the like are assumed as the information processing device 70. Furthermore, the information processing device 70 may be a computer device configured as a server device or an arithmetic device in cloud computing.

In the case of the present embodiment, specifically, the information processing device 70 can function as a 3D model creation device that creates a 3D model in the asset creation ST1.

Furthermore, the information processing device 70 can function as the rendering engine 520 constituting the imaging system 500 used in the production ST2. Moreover, the information processing device 70 can also function as the asset server 530.

Furthermore, the information processing device 70 can also function as a video editing device that performs various types of video processing in the post-production ST3.

A CPU 71 of the information processing device 70 illustrated in Fig. 8 executes various processes in accordance with a program stored in a nonvolatile memory unit 74 such as a ROM 72 or, for example, an electrically erasable programmable read-only memory (EEP-ROM), or a program loaded from a storage unit 79 to a RAM 73. The RAM 73 also appropriately stores data and the like necessary for the CPU 71 to execute the various types of processing.

A video processing unit 85 is configured as a processor that performs various types of video processing. For example, the processor is a processor capable of performing any one of 3D model generation processing, rendering, DB processing, video editing processing, and the like, or a plurality of types of processing.

The video processing unit 85 can be implemented by, for example, a CPU, a graphics processing unit (GPU), general-purpose computing on graphics processing units (GPGPU), an artificial intelligence (AI) processor, or the like that is separate from the CPU 71.

Note that the video processing unit 85 may be provided as a function in the CPU 71.

The CPU 71, the ROM 72, the RAM 73, the nonvolatile memory unit 74, and the video processing unit 85 are connected to one another via a bus 83. An input/output interface 75 is also connected to the bus 83.

An input unit 76 including an operation element and an operation device is connected to the input/output interface 75. For example, as the input unit 76, various types of operation elements and operation devices such as a keyboard, a mouse, a key, a dial, a touch panel, a touch pad, a remote controller, and the like are assumed.

A user operation is detected by the input unit 76, and a signal corresponding to an input operation is interpreted by the CPU 71.

A microphone is also assumed as the input unit 76. A voice uttered by the user can also be input as the operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various types of displays, and includes, for example, a display device provided in a housing of the information processing device 70, a separate display device connected to the information processing device 70, and the like.

The display unit 77 displays various images, operation menus, icons, messages, and the like, that is, displays as a graphical user interface (GUI), on the display screen on the basis of the instruction from the CPU 71.

In some cases, the storage unit 79 including a hard disk drive (HDD), a solid-state memory, or the like or a communication unit 80 is connected to the input/output interface 75.

The storage unit 79 can store various pieces of data and programs. A DB can also be configured in the storage unit 79.

For example, in a case where the information processing device 70 functions as the asset server 530, a DB that stores a 3D background data group can be constructed using the storage unit 79.

The communication unit 80 performs communication processing via a transmission path such as the Internet, wired/wireless communication with various devices such as an external DB, an editing device, and an information processing device, bus communication, and the like.

For example, in a case where the information processing device 70 functions as the rendering engine 520, the communication unit 80 can access the DB as the asset server 530, and receive imaging information from the camera 502 or the camera tracker 560.

Furthermore, also in a case of the information processing device 70 used in the post-production ST3, the communication unit 80 can access the DB as the asset server 530.

A drive 81 is also connected to the input/output interface 75 as necessary, and a removable recording medium 82 such as a magnetic disk, an optical disk, a magneto-optical disk, a semiconductor memory, or the like is appropriately mounted.

The drive 81 can read video data, various computer programs, and the like from the removable recording medium 82. The read data is stored in the storage unit 79, and video and audio included in the data are output by the display unit 77 and the audio output unit 78. In addition, the computer program and the like read from the removable recording medium 82 are installed in the storage unit 79, as necessary.

In the information processing device 70, for example, software for the processing of the present embodiment can be installed via network communication by the communication unit 80 or the removable recording medium 82. Alternatively, the software may be stored in advance in the ROM 72, the storage unit 79, or the like.

### <3. Video processing applicable to virtual production>

Video processing according to the present embodiment applicable to virtual production will be described.

The video captured by the camera 502 by the above-described virtual production imaging system 500 is referred to as a "captured video vC". Normally, the range of the subject included in the video of the captured video vC is similar to that of the monitor video vM.

Then, the captured video vC is obtained by imaging an object such as the performer 510 and the background video vB of the LED wall 505 by the camera 502.

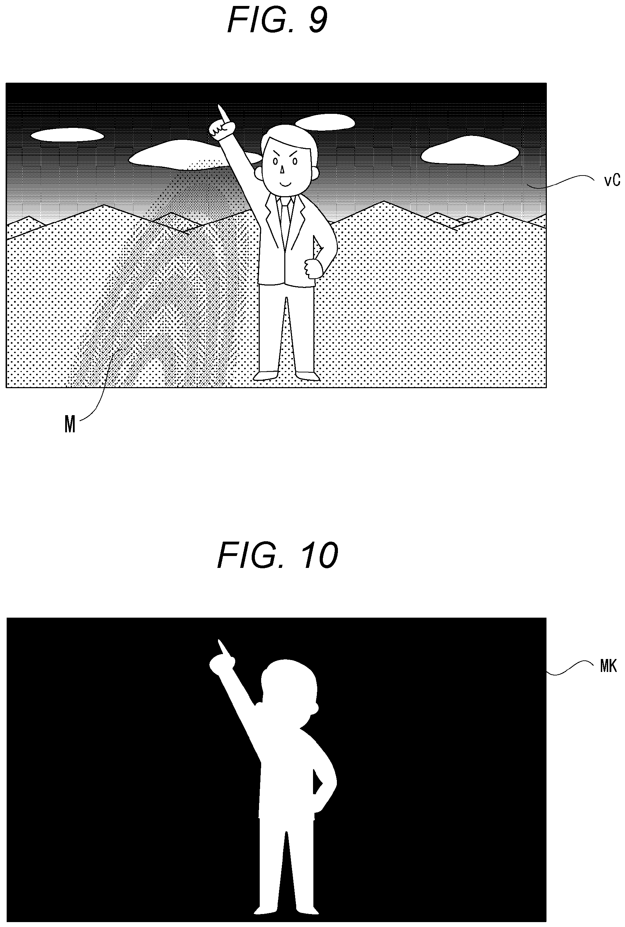

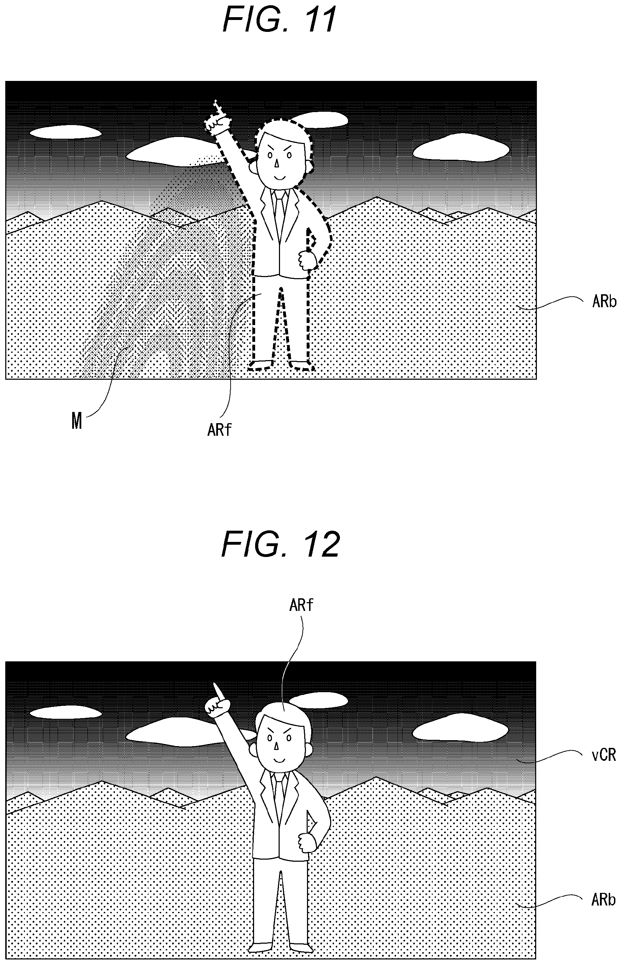

The video processing of the embodiment basically separates a background area ARb and a foreground area ARf (described later with reference to Fig. 10) for the captured video vC by using mask information (mask MK in Fig. 11 described later). Then, video processing for the background area ARb or video processing for the foreground area ARf is performed.

The background area ARb is an in-video region in which the background video vB appears in the captured video vC. As can be understood from the above description, the capturing region video vBC of the background video vB is actually reflected in the captured video vC.

The foreground area ARf is an in-video region in which an object serving as a foreground appears in the captured video vC. For example, the region is a region in which a subject that actually exists, such as a person as the performer 510 or an article, is shown.

In the captured video vC, the background area ARb and the foreground area ARf are clearly separated, and video processing is individually performed.

Specific examples of the video processing include moire reduction processing, video correction processing, and the like.

First, this circumstance will be described. When imaging is performed with the LED wall 505 on a background as described above, the following situation is assumed.
- Moire may occur in the captured video vC by capturing the background video vB displayed on the LED wall 505.
- When the background video vB displayed on the LED wall 505 is imaged, a defect or noise of a part of the background may occur in the captured video vC. In this case, for example, it is necessary to perform correction such as fitting a CG image after imaging.

Generation of moire will be described. Fig. 9 schematically illustrates a state in which moire (interference fringes) M is generated in captured video vC.

The occurrence of such moire M can be avoided by, for example, attaching a moire elimination filter to the LED wall 505, but it is expensive in terms of cost. More simply, the moire M can be reduced (reduced or eliminate) by performing imaging in a slightly defocus state to blur the video or performing processing of blurring the video on the captured video vC after imaging.

However, by doing so, even a real object such as the performer 510 becomes a blurred video, which is not a method that can be always applied.

For example, in order to cope with such a case, in the present embodiment, it is made possible to separate and process the background area ARb and the foreground area ARf for the captured video vC.

For example, a mask MK as illustrated in Fig. 10 is generated for one frame of the captured video vC as illustrated in Fig. 9. This is information for separating the region of the captured object and the region of the video of the LED wall 505 within one frame of the captured video vC.

By applying the mask MK illustrated in Fig. 10 to the frame illustrated in Fig. 9, the background area ARb and the foreground area ARf can be determined as illustrated in Fig. 11. In Fig. 11, the boundary between the background area ARb and the foreground area ARf is indicated by a thick broken line for the sake of description.

For example, when the background area ARb is specified in this way, moire reduction processing is performed only on the background area ARb as, for example, low-pass filter (LPF) processing or the like.

Then, as illustrated in Fig. 12, a processed captured video vCR in which the moire M is removed (or reduced) as illustrated in Fig. 12 can be obtained. In this case, the foreground area ARf is not affected by the moire reduction processing.

The above is an example of moire reduction, but for example, there are a case where it is desired to correct or edit only the background area ARb, a case where it is desired to reduce the moire of the foreground area ARf, a case where it is desired to correct or edit the foreground area ARf, and the like. Also in such a case, by making it possible to separate the background area ARb and the foreground area ARf using the mask MK, video processing of only the foreground area ARf or only the background area ARb becomes possible.

Here, a configuration example for generating the mask MK will be described.

In the present embodiment, a short wavelength infrared (SWIR) camera (infrared short wavelength camera) is used to generate the mask MK. By using the SWIR camera, it is possible to separate the video of the LED wall 505 in which the light source changes drastically and the video of the subject to be the foreground.

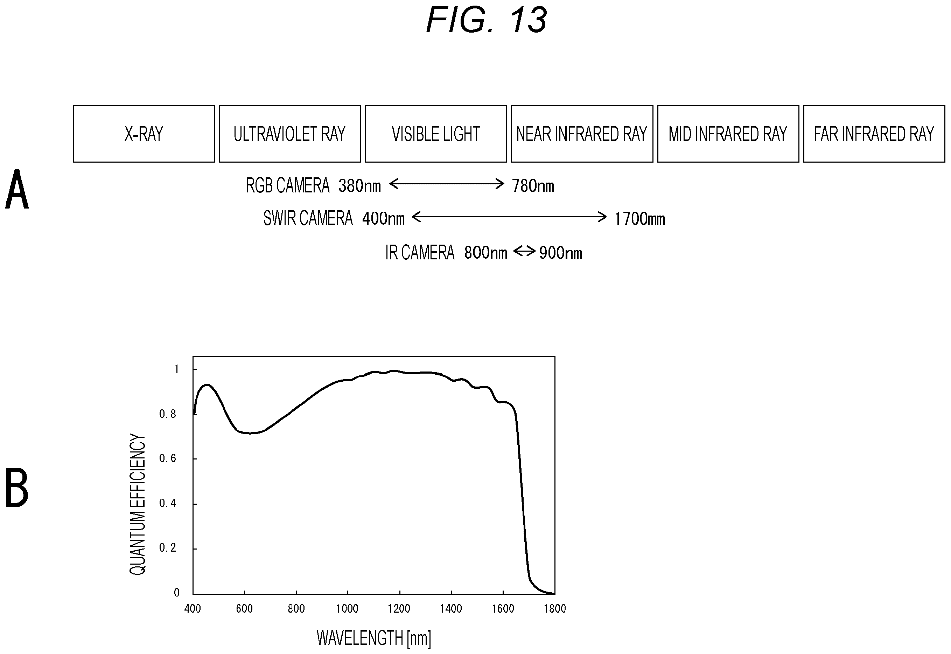

Fig. 13A illustrates wavelength bands that can be captured by the RGB camera, the SWIR camera, and the IR camera (infrared light camera).

The RGB camera is a camera that images visible light in a wavelength band of 380 nm to 780 nm, for example. Normally, the RGB camera is used as the camera 502 for obtaining the captured video vC.

The IR camera is a camera that images near-infrared light of 800 nm to 900 nm.

Examples of the SWIR camera include the following types (a), (b), and (c).
(a) Camera capable of imaging wavelength band of 900 nm to 2500 nm
(b) Camera capable of imaging wavelength band of 900 nm to 1700 nm
(c) Camera capable of imaging wavelength band near 1150 nm (with front-back tolerance)

Although these are examples, for example, the SWIR camera covers a wider wavelength band than the IR camera, and a camera capable of imaging in a wavelength band of, for example, 400 nm to 1700 nm, or the like is commercially available. Fig. 13B illustrates the quantum efficiency for each wavelength of a commercially available SWIR camera. As illustrated, high quantum efficiency is achieved in the range of 400 nm to 1700 nm. That is, since the wavelength bands of the above (b) and (c) can be covered, any SWIR camera having characteristics as illustrated in Fig. 13B can be applied.

In the imaging system 500, for example, an object such as the performer 510 is irradiated with infrared rays using a part of the light 580 and imaged by the SWIR camera. In the near-infrared band, the video on the LED wall 505 is not reflected and becomes a black image, and the performer 510 and the like reflect infrared light and a certain degree of luminance is observed. Therefore, by determining the luminance difference in the frame in the captured video of the SWIR camera, it is possible to generate the mask MK that extracts only the object with high accuracy.

Note that the IR camera can also observe infrared light reflected by the performer 510 and the like, but in a case of the IR camera, it is difficult to detect the hair of a person as a silhouette. On the other hand, in a case of the SWIR camera, the range of a person including the hair can be appropriately detected.

Hair is harder to reflect than skin, but it is effective to cover a high wavelength band for detecting a hair region. For example, in a case of a camera capable of imaging around 1150 nm as in (c) above, the reflectance of the hair of a person and the reflectance of the skin are equivalent to each other.

However, the reflectance of the hair varies depending on the gender and the race (dark hair, blonde hair, or the like), and also varies depending on whether or not the hair is dyed, but for example, in a case of the SWIR camera having the characteristic as illustrated in Fig. 13B, the brightness of the skin and the hair becomes equivalent by integrating and imaging the wavelength band of 850 nm to 1700 nm, and the range of the head can be clearly determined.

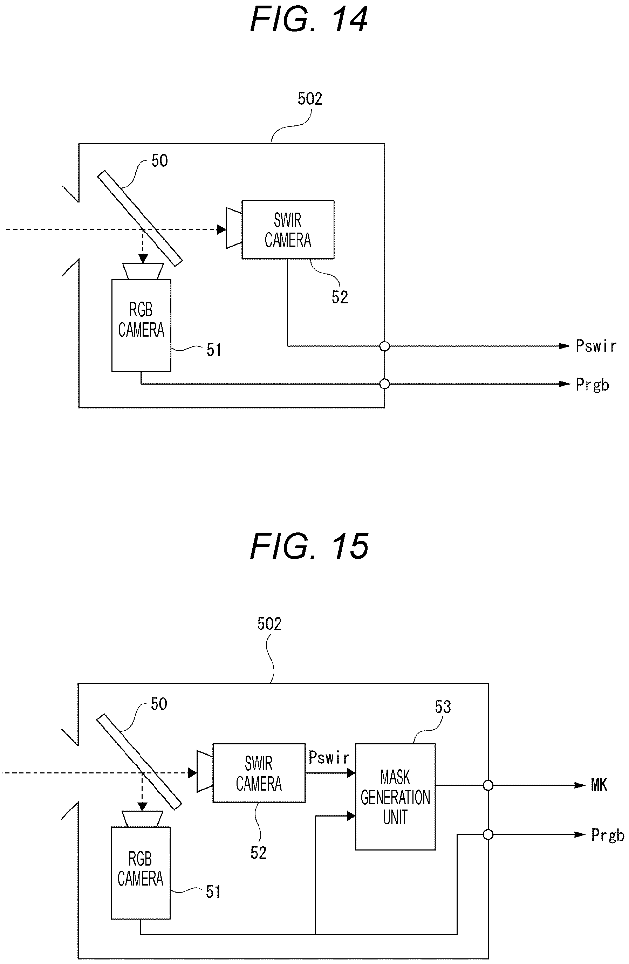

In order to use such an SWIR camera, for example, the camera 502 is configured as illustrated in Fig. 14.

An RGB camera 51 and an SWIR camera 52 are arranged in a unit as one camera 502. Then, incident light is separated by a beam splitter 50, and the incident light is incident on the RGB camera 51 and the SWIR camera 52 in a state of the same optical axis.

A video Prgb used as the captured video vC is output from the RGB camera 51. The SWIR camera 52 outputs a video Pswir for generating the mask MK.

In this manner, by configuring the camera 502 as a coaxial camera including the RGB camera 51 and the SWIR camera 52, the RGB camera 51 and the SWIR camera 52 do not generate parallax, and the video Prgb and the video Pswir can be videos having the same timing, the same angle of view, and the same visual field range.

Mechanical position adjustment and optical axis alignment using a video for calibration are performed in advance in the unit as the camera 502 so that the optical axes coincide with each other. For example, processing of capturing the video for calibration, detecting a feature point, and performing alignment is performed in advance.

Note that, even in a case where the RGB camera 51 uses a high-resolution camera for high-definition video content production, the SWIR camera 52 does not need to have high resolution as well. The SWIR camera 52 may be any camera as long as it can extract a video whose imaging range matches that of the RGB camera 51. Therefore, the sensor size and the image size are not limited to those matched with those of the RGB camera 51.

Furthermore, at the time of imaging, the RGB camera 51 and the SWIR camera 52 are synchronized in frame timing.

In addition, the SWIR camera 52 may also perform zooming or adjust a cutout range of an image according to the zoom operation of the RGB camera 51.

Note that the SWIR camera 52 and the RGB camera 51 may be arranged in a stereo manner. This is because the parallax does not become a problem in a case where the subject does not move in the depth direction.

Furthermore, a plurality of SWIR cameras 52 may be provided.

For example, in a case where a configuration as illustrated in Fig. 14 is used as the camera 502 in the imaging system 500, the video Prgb and the video Pswir are supplied to the rendering engine 520.

In the rendering engine 520 having the configuration of Fig. 8, the video processing unit 85 generates the mask MK using the video Pswir. Furthermore, although the rendering engine 520 uses the video Prgb as the captured video vC, the video processing unit 85 can separate the background area ARb and the foreground area ARf using the mask MK for each frame of the video Prgb, perform necessary video processing, and then record the processed captured video vCR on the recording medium. For example, the captured video vC (the processed captured video vCR) is stored in the storage unit 79. Alternatively, it can be transferred to and recorded in the asset server 530 or another external device.

Fig. 15 illustrates another configuration example of the camera 502.

In this case, in addition to the configuration of Fig. 14, a mask generation unit 53 is provided in the unit as the camera 502. The mask generation unit 53 can be configured by, for example, a video processing processor. The mask generation unit 53 receives an input of the video Pswir from the SWIR camera 52 and generates a mask MK. Note that, in a case where the cutout range from the video Pswir is adjusted at the time of generating the mask MK, the mask generation unit 53 also inputs and refers to the video Prgb from the RGB camera 51.

The video Prgb and the mask MK are supplied from the camera 502 to the rendering engine 520. In that case, the rendering engine 520 can acquire the mask MK and separate the background area ARb and the foreground area ARf using the mask MK for each frame of the video Prgb.

Note that, although not illustrated, also in the case of the configurations of Figs. 14 and 15, part of the imaging information is supplied from the camera 502 to the rendering engine 520 as described above.

For example, an angle of view, a focal length, an f-number (aperture value), a shutter speed, lens information, a camera direction, and the like as imaging information are supplied from the camera 502 to the rendering engine 520 as information regarding the RGB camera 51. Furthermore, the position information of the camera 502, the camera direction, and the like detected by the camera tracker 560 are also supplied to the rendering engine 520 as imaging information.

### <4. First embodiment>

Hereinafter, a specific processing example will be described. As a first embodiment, an example will be described in which the rendering engine 520 performs the moire reduction processing of the background area ARb for the captured video vC at the time of imaging. The configuration of Fig. 14 is assumed as the camera 502.

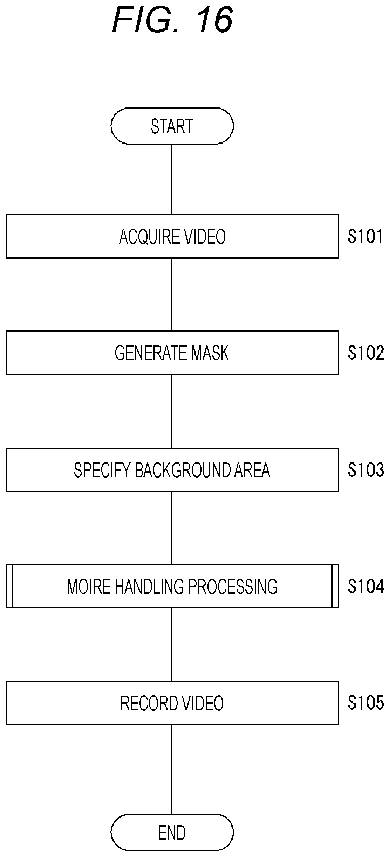

Fig. 16 illustrates video processing performed by the rendering engine 520 for each frame of the captured video vC.

As illustrated in Fig. 6 described above, the rendering engine 520 renders the capturing region video vBC for each frame in order to generate the background video vB to be displayed on the LED wall 505. In parallel with this, the rendering engine 520 performs the processing of Fig. 16 for each frame of the captured video vC imaged by the camera 502.

In step S101, the rendering engine 520 performs video acquisition. That is, the captured video vC of one frame transmitted from the camera 502 is set as a processing target.

Specifically, the rendering engine 520 processes the video Prgb and the video Pswir of one frame transmitted from the camera 502. At the same time, the rendering engine 520 also acquires imaging information transmitted from the camera 502 or the camera tracker 560 corresponding to the frame.

In step S102, the rendering engine 520 generates the mask MK to be applied to the current frame. That is, the rendering engine 520 generates the mask MK using the video Pswir as described above.

In step S103, the rendering engine 520 specifies the captured video vC of the frame acquired this time, that is, the background area ARb for the video Prgb, using the mask MK generated in step S102.

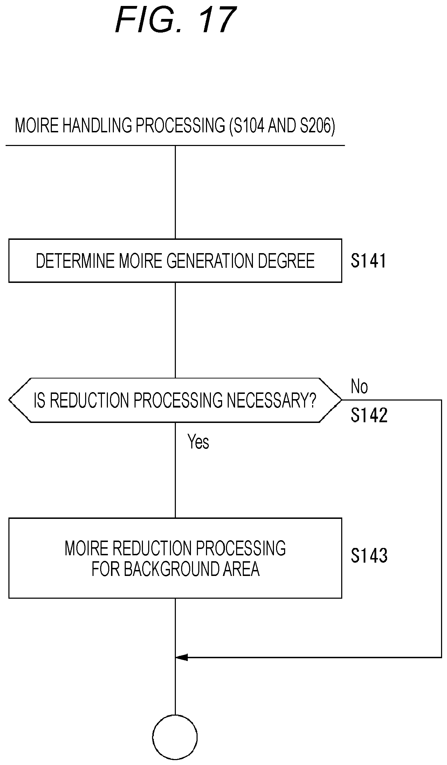

In step S104, the rendering engine 520 performs moire handling processing on the background area ARb. An example of the moire handling processing is illustrated in Fig. 17.

The rendering engine 520 performs moire generation degree determination in step S141.

As processing of the moire generation degree determination, processing of measuring how much moire M is actually generated and processing of estimating how much moire is generated can be considered.

Furthermore, the degree of moire M includes an area degree and intensity (clarity (luminance difference) of an interference fringe pattern appearing as moire).

First, as a processing example of measuring the degree of moire M actually occurring, there is the following method.

For the captured video vC to be processed, that is, the video Prgb from the RGB camera, the background video vB at the timing when the frame is imaged is acquired. Note that, for this purpose, the rendering engine 520 records the background video vB and at least the capturing region video vBC (the video of the inner frustum) generated in the processing of Fig. 6 for each frame on the recording medium so that the background video vB and the capturing region video vBC can be referred to later.

In the captured video vC, the background area ARb is specified. Furthermore, the capturing region video vBC referred to is a video signal supplied to the LED wall 505. Therefore, with respect to the background area ARb of the captured video vC and the background area ARb of the capturing region video vBC, after matching of the feature points is performed to match the regions of the video content, a difference between the values of the corresponding pixels in the regions is obtained, and the difference value is binarized with a certain threshold value. Then, if there is no moire M, other noise, or the like, the binarized value becomes constant in all the pixels.

In other words, when the moire M, noise, or the like occurs in the captured video vC, a repeated pattern is observed as a binarized value, which can be determined as the moire M. The degree of moire M can be determined by a range in which interference fringes appear and a luminance difference in the interference fringes (difference between difference values before binarization).

Examples of a method for estimating the degree of moire M include the following.

First, there is a method of acquiring imaging environment information and estimating the generation degree of moire M prior to imaging. The imaging environment information is fixed information in the imaging system 500. Here, "fixed" means information that does not change for each frame of the captured video vC.

For example, the generation degree of moire M can be estimated by acquiring a pitch width of the pixels of the LED panel 506 as the imaging environment information. The larger the pitch width, the higher the frequency of occurrence of the moire M, and thus it is possible to estimate how much moire M occurs by the value of the pitch width.

Note that the determination of the generation degree of moire M based on such imaging environment information may be performed initially before the start of imaging, and only the determination result may be referred to in step S141 performed for each frame. In addition, other fixed information such as the type of the light 580, the light emission state at the time of imaging, and the 3D background data for generating the background video vB to be displayed on the LED wall 505 may be acquired as the imaging environment information, and it may be determined in advance whether or not the imaging environment is an environment in which the moire M is likely to occur.

In addition, there is a method of estimating the generation degree of moire M for each frame using the imaging information corresponding to each frame.

The generation degree of moire M can be estimated by obtaining the distance between the LED wall 505 and the camera 502 from the position information of the camera 502 in the imaging information. This is because the occurrence frequency of moire M increases as the distance decreases. Therefore, the degree of moire M can be estimated according to the value of the distance.

Further, by obtaining the angle of the camera 502 with respect to the LED wall 505 from the information of the direction of the camera 502 in the imaging information, the generation degree of moire M can be estimated. For example, the moire M is more likely to occur in a case where the LED wall 505 is imaged as viewed from above, in a case where the LED wall is imaged as viewed from below, in a case where the LED wall is imaged at an angle from the left or right, or the like than in a case where the LED wall 505 is imaged as facing the front. In particular, as the angle between the LED wall 505 and the camera 502 becomes steeper, the moire generation frequency becomes higher. Therefore, when the angle of the camera 502 with respect to the LED wall 505 is obtained, the generation degree of moire M can be estimated by the value of the angle.

After determining the moire generation degree in any one or a plurality of the processes as described above in step S141 of Fig. 17, the rendering engine 520 determines whether or not the moire reduction processing is necessary in step S142.

In a case where it can be determined that the moire M has not occurred, or that it is equivalent to that no moire has occurred, it is determined that the moire reduction processing is not performed for the current frame, and the moire handling processing in Fig. 17 is terminated from step S142.

On the other hand, in a case where it is determined that the moire M has occurred or the moire M has occurred to a certain degree or more, the rendering engine 520 proceeds from step S142 to step S143 and executes the moire reduction processing for the background area ARb.

That is, the background area ARb is subjected to LPF processing or BPF (bandpass filter) processing at a certain cutoff frequency to thereby smooth (blur) the striped portion and reduce or eliminate the moire M. Thus, the moire handling processing in Fig. 17 is terminated.

After terminating the moire handling processing as in Fig. 17 as step S104 in Fig. 16, the rendering engine 520 performs video recording in step S105.

That is, for the frame on which the moire reduction processing has been performed on the background area ARb, the processed captured video vCR is recorded on the recording medium, or in a case where the moire reduction processing is unnecessary and has not been performed, the original captured video vC is recorded on the recording medium as frame data obtained by imaging.

By the rendering engine 520 performing the above processing for each frame of the captured video vC, the video content subjected to the moire reduction processing as necessary is recorded at the time of imaging as the production ST2.

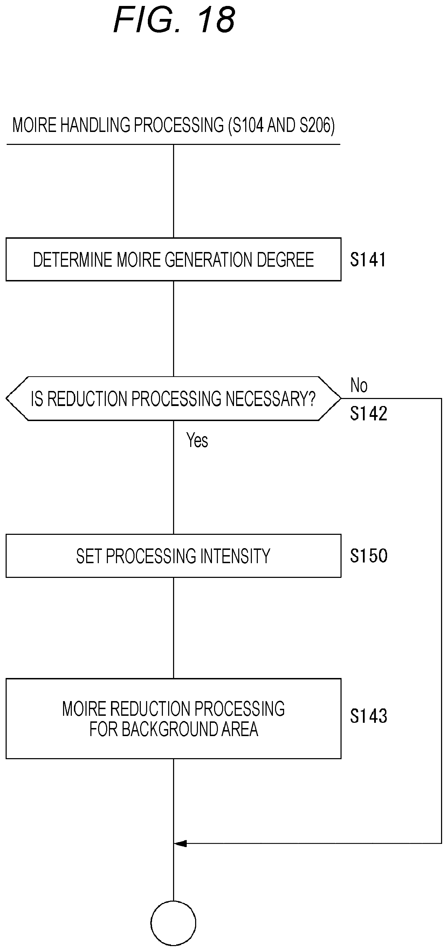

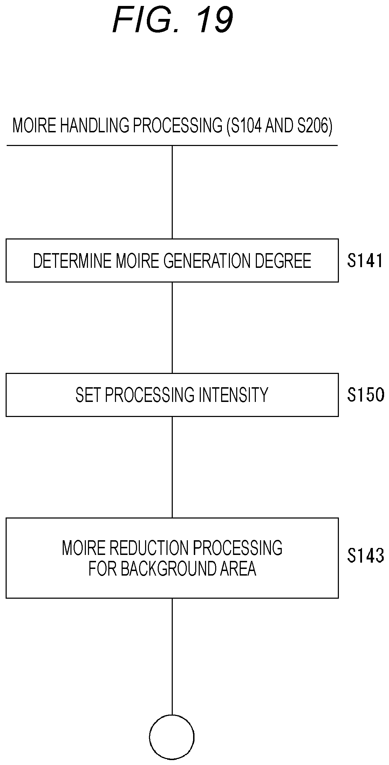

Figs. 18 and 19 illustrate another example of the moire handling processing in step S104 in Fig. 6.

In the example of Fig. 18, the rendering engine 520 first performs the moire generation degree determination in step S141, and determines whether or not the moire reduction processing is necessary in step S142. The process up to this point is similar to that in Fig. 17.

In a case of the example of Fig. 18, in a case where the moire reduction processing is performed, the rendering engine 520 sets the processing intensity of the moire reduction processing in step S150.

In this setting, the processing intensity is increased when the degree of moire is large, and the processing intensity is decreased when the degree of moire is small.

For example, the cutoff frequency of the LPF processing is changed to set the intensity of the degree of blurring.

Furthermore, the flat portion of the video can be detected by performing the edge detection of the video in the frame, and thus it is conceivable that the processing intensity is increased in a case where the moire M is observed in the flat portion.

Specifically, the processing intensity is set according to the result of the moire generation degree determination in step S141. For example, the moire reduction processing intensity is set higher as the degree of moire M observed from the difference between the background area ARb of the captured video vC and the region corresponding to the background area ARb in the capturing region video vBC is larger, and the moire reduction processing intensity is set lower as the degree of moire M is smaller.

Further, for example, the moire reduction processing intensity is set higher as the pitch width of the LED panel 506 is wider, and the moire reduction processing intensity is set lower as the pitch width is narrower.

Furthermore, for example, the moire reduction processing intensity is set higher as the distance between the LED wall 505 and the camera 502 is shorter, and set lower as the distance is longer.

Further, for example, the moire reduction processing intensity is set higher as the angle between the LED wall 505 and the camera 502 becomes steeper, and set lower as the angle is closer to 90 degrees (orthogonal positional relationship).

In addition, the moire reduction processing using machine learning may be performed.

For example, learning data obtained by performing the reduction processing while changing the type (pass band) of the BPF according to the pattern and intensity of various moire is prepared in advance, and learning data of the optimum moire reduction processing is generated according to the pattern of various moire M. In step S150, whether to use such a BPF may be set for the pattern of the moire M in the current frame.

After setting the processing intensity in step S150, the rendering engine 520 executes the moire reduction processing with the processing intensity set for the background area ARb in step S143.

Next, the example of Fig. 19 is an example in which the processing intensity is set for each frame and the moire reduction processing is performed.

The rendering engine 520 determines the moire generation degree in step S141, and sets the processing intensity according to the result of the moire generation degree determination in step S150. Then, after setting the processing intensity, the rendering engine 520 performs the moire reduction processing in step S143.

As described above, examples illustrated in Figs. 17, 18, and 19 can be considered as the moire handling processing. Although not illustrated, still other examples are conceivable. For example, an example in which the moire reduction processing is performed by the LPF processing or the BPF processing at a specific cutoff frequency without performing the moire generation degree determination for each frame is also conceivable.

### <5. Second embodiment>

An example of performing video correction processing of the background area ARb will be described as a second embodiment.

Although it has been described above that there is a case where a defect or noise of a part of the background occurs in the captured video vC by capturing the background video vB displayed on the LED wall 505, there are the following cases specifically.

For example, there is a case where the subject and the LED wall 505 are close to each other, and pixels of the LED panel 506 are visible when the subject is imaged by zooming.

Further, for example, in a case where the 3D background data is incomplete at the time of imaging, or the like, there is a case where the content and the image quality of the background video vB are insufficient, and correction is necessary after imaging.

Furthermore, in a case where an LED on the LED wall 505 has a defect or in a case where there is a region where light is not emitted, the video of the region has a defect.

In addition, a defect may occur in the video due to the relationship between the driving speed of the LED panel 506 and the shutter speed of the camera 502.

Furthermore, noise may occur due to a quantization error at the time of processing the background video vB to be displayed or the imaging signal of the camera 502.

For example, in these cases, it is preferable to perform correction processing on the background area ARb.

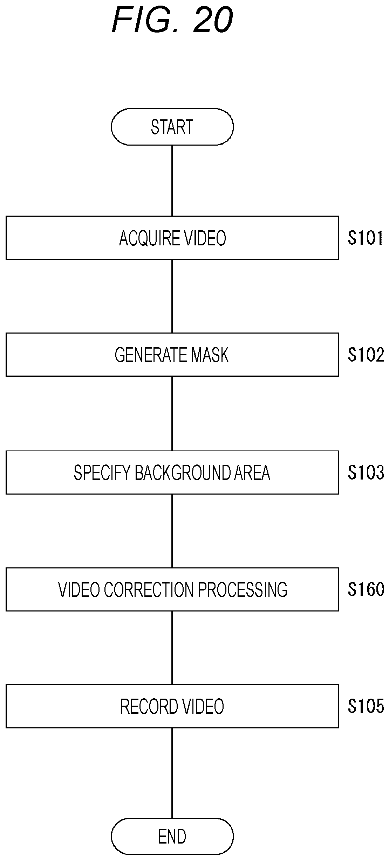

Fig. 20 illustrates a processing example of the rendering engine 520. Similarly to Fig. 16, Fig. 20 illustrates a processing example executed for each frame of the captured video vC.

Note that, in the following flowchart, the same process as that in the above-described flowchart is denoted by the same step number, and redundant detailed description is avoided.

In step S101, the rendering engine 520 acquires necessary information for one frame of the captured video vC, that is, the video Prgb, the video Pswir, and the imaging information.

Then, the mask MK of the current frame is generated in step S102, and the background area ARb in the video Prgb is specified in step S103.

In step S160, the rendering engine 520 performs video correction processing on the background area ARb. For example, processing of correcting a defect, noise, or the like as described above is performed.

For example, in a case where a pixel of the LED panel 506 is visible, the background area ARb is blurred so that the pixel is not visible.

Further, when the content or the image quality of the background video vB is insufficient, a part or all of the background area ARb is replaced with a CG image.

Furthermore, in a case where the LED on the LED wall 505 has a defect or in a case where there is a region where light is not emitted, the video of the region is replaced with a CG image.

Further, in a case where a defect occurs in the video due to the relationship between the driving speed of the LED panel 506 and the shutter speed of the camera 502, the video of the region is replaced with a CG image. Furthermore, the noise reduction processing is performed in a case where noise is generated due to a quantization error at the time of processing the background video vB to be displayed or the imaging signal of the camera 502.

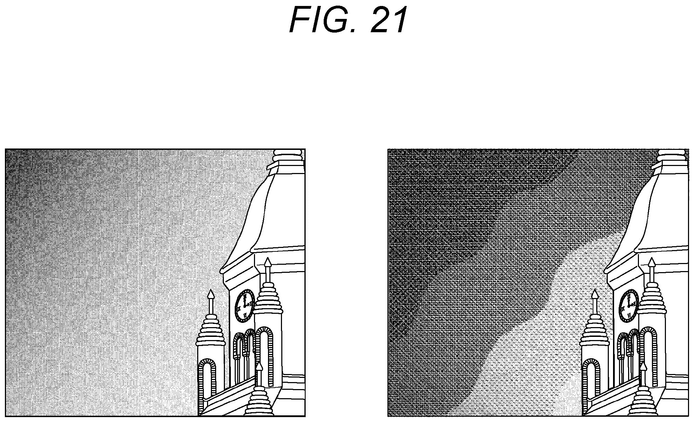

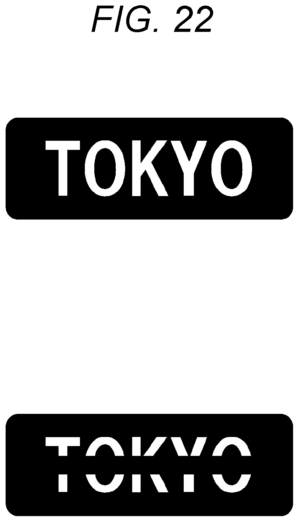

Figs. 21 and 22 illustrate examples.

The left side of Fig. 21 illustrates an example in which original video is illustrated and the hue of the empty portion is gradation. As illustrated on the right side of the drawing, a bounding (streak-like pattern) may occur due to a quantization error. At this time, smoothing is performed to remove the banding.

Fig. 22 illustrates an example of the defect. For example, when characters of "TOKYO" are displayed on the background video vB, a part of the background video vB may appear defective as in the video below the drawing. In such a case, the defect is eliminated using a CG video, and correction is performed as in the video above the drawing.

After performing the video correction processing as described above, the rendering engine 520 performs processing of recording the frame as the captured video vC (the processed captured video vCR) in step S105 of Fig. 20.

By such processing, the captured video vC in which a defect and noise are corrected can be recorded and provided to the post-production ST3 in the process of the production ST2.

<6. Third embodiment>

As a third embodiment, an example in which video processing of the foreground area ARf is also performed in addition to video processing of the background area ARb at the time of imaging will be described.

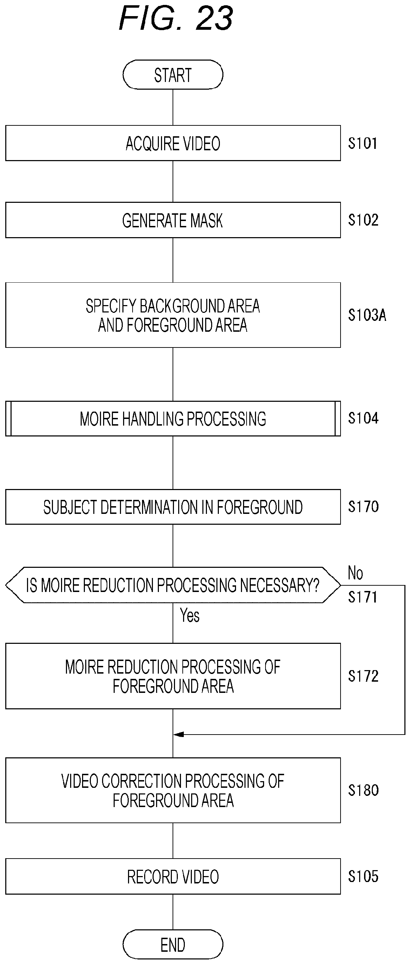

Fig. 23 illustrates a processing example of the rendering engine 520. Similarly to Fig. 16, Fig. 23 illustrates a processing example executed for each frame of the captured video vC.

In step S101, the rendering engine 520 acquires necessary information for one frame of the captured video vC, that is, the video Prgb, the video Pswir, and the imaging information.

Then, in step S102, a mask MK for the current frame is generated.

In step S103A, the background area ARb and the foreground area ARf in the video Prgb are specified on the basis of the mask MK.

In step S104, the moire handling processing for the background area ARb is performed as described in Fig. 16 (and Figs. 17, 18, and 19).

Note that the video correction processing (step S160) described in Fig. 20 may be performed instead of step S104 or in addition to step S104.

In step S170, the rendering engine 520 performs subject determination in the foreground area ARf.

For example, here, it is determined whether moire occurs in the video of the object. Specifically, it is determined whether or not the moire M is likely to occur from clothing of the performer 510 or the like.

The moire M is likely to occur in a case where the performer 510 in the foreground wears clothing with a stripe pattern or a check pattern. Accordingly, it is determined whether or not a stripe pattern or a check pattern is included in the foreground area ARf of the captured video vC. Note that, without being limited to clothing, presence of a striped pattern may be confirmed.

Furthermore, as the subject determination in the foreground area ARf in step S170, whether or not the moire M has actually occurred may be detected.

In step S171, the rendering engine 520 determines whether or not the moire reduction processing is necessary from the determination result in step S170. For example, when the clothing of the performer 510 and the like have a stripe pattern or a check pattern, it is determined that the moire reduction processing is necessary.

In that case, the rendering engine 520 proceeds to step S172 and performs the moire reduction processing for the foreground area ARf.

For example, the moire reduction is performed by performing LPF processing or BPF processing in the range of the foreground area ARf. Furthermore, according to the video Pswir of the SWIR camera 52, it is possible to distinguish the skin region and the clothing region of the subject. This is because the skin is hard to reflect, and the clothing is well reflected.

Accordingly, the clothing region may be determined from the video Pswir, and the moire reduction processing may be performed only on the clothing region.

In addition, as described in the moire handling processing for the background area ARb in the first embodiment, the determination of the generation degree of moire M may also be performed for the foreground area ARf, and the processing intensity of the moire reduction processing may be variably set.

In a case where it is determined in step S171 that the moire reduction processing is unnecessary, for example, in a case where no clothing with a stripe pattern or check pattern is observed, the rendering engine 520 does not perform the process of step S172.

Next, in step S180, the rendering engine 520 performs video correction processing of the foreground area ARf. For example, it is conceivable to perform luminance adjustment and color adjustment of the foreground area.

For example, when the automatic exposure control of the camera 502 is performed due to the influence of the luminance of the background video vB displayed on the LED wall 505, the luminance of the video of the object such as the performer 510 may be too high or too low. Accordingly, the luminance of the foreground area ARf is adjusted in accordance with the luminance of the background area ARb.

Furthermore, for example, in a case where the hue of the video of the object such as the performer 510 becomes unnatural due to the influence of the background video vB displayed on the LED wall 505, it is also conceivable to perform color adjustment of the foreground area ARf.

After the above processing, the rendering engine 520 performs processing of recording the frame as the captured video vC (the processed captured video vCR) in step S105.

With such processing, in the process of the production ST2, the captured video vC (the processed captured video vCR) in which the moire M is reduced for each of the background area ARb and the foreground area ARf or necessary video processing is performed can be provided to the post-production ST3.

Note that, in the example of Fig. 23, the video processing of the foreground area ARf is performed in addition to the video processing of the background area ARb, but a processing example in which only the video processing of the foreground area ARf is performed is also conceivable. For example, Fig. 23 illustrates a processing example in which step S104 is excluded.

### <7. Fourth embodiment>

As a fourth embodiment, an example will be described in which video processing is performed to distinguish the background area ARb and the foreground area ARf, for example, at the stage of the post-production ST3 after imaging.

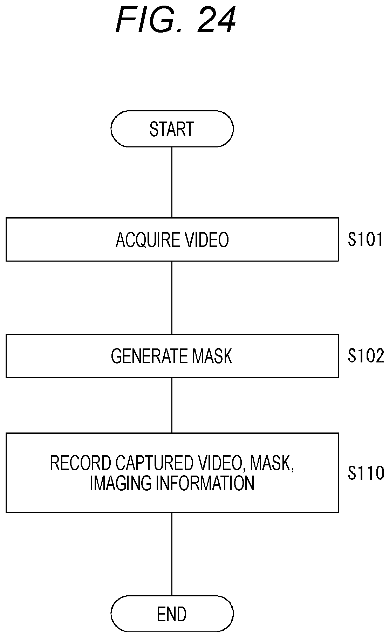

For this purpose, at the time of imaging, the rendering engine 520 performs the processing of Fig. 24 for each frame of the captured video vC.

The rendering engine 520 acquires necessary information for one frame of the captured video vC in step S101, that is, the video Prgb, the video Pswir, and the imaging information, and generates the mask MK for the frame in step S102.

In step S110, the rendering engine 520 records the frame of the captured video vC (the video Prgb), and the imaging information and the mask MK as metadata associated with the frame on the recording medium.

In this way, when each frame of the captured video vC is to be processed at a later point in time, the corresponding imaging information and mask MK can be acquired.

Note that, in step S110, the frame of the captured video vC (the video Prgb), the imaging information for the frame, and the video Pswir at the same frame timing may be recorded on the recording medium in association with each other. This is because the mask MK can be generated at a later time point by recording the video Pswir.

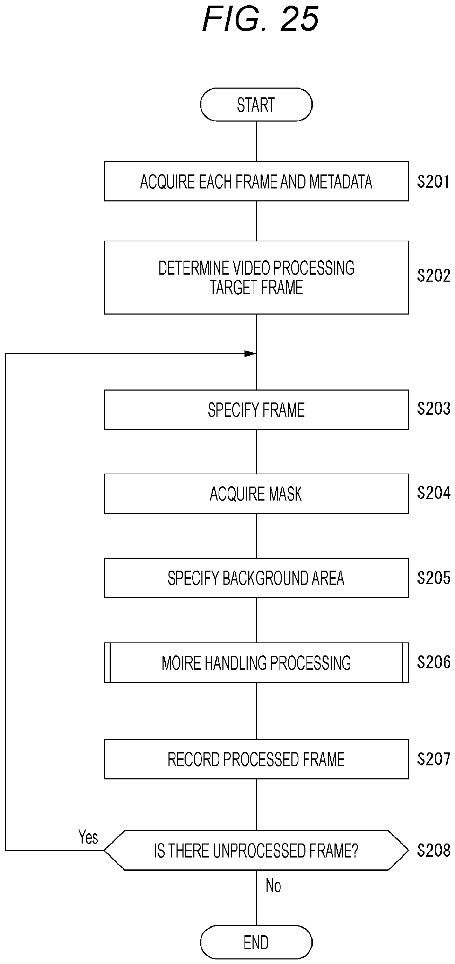

An example of processing in the post-production ST3 is illustrated in Fig. 25. This is, for example, processing of the information processing device 70 that performs video processing at the stage of the post-production ST3. The information processing device 70 may be the rendering engine 520 or another information processing device.

In step S201, the information processing device 70 reads the video content to be processed from the recording medium, and acquires the video and the metadata of each frame as the processing target.

Note that, in a case where the imaging environment information is recorded corresponding to the video content or the scene in the video content, the imaging environment information is also acquired. For example, the pitch width is information of a pitch width of the pixels of the LED panel 506, or the like.

In step S202, the information processing device 70 determines a frame to be a video processing target.

Since the imaging information and the imaging environment information of each frame are recorded as the metadata, it is possible to determine in which frame of the video content to be processed there is a high possibility that, for example, moire has occurred. For example, as described above, the generation degree of moire can be determined from the distance, the angular relationship, and the like between the camera 502 and the LED wall 505.

Furthermore, by analyzing the video of each frame, the position of the subject in the performance area 501 can be determined, and the actual generation degree of moire M can be determined.

For example, in a case where the distance between the object in the foreground area ARf and the LED wall 505 is sufficiently long, the face of the subject is imaged with a telephoto lens (determined from the F value), and the background is blurred, the moire generation frequency is low.

Furthermore, for example, in a case where the distance between the subject and the LED wall 505 is short, the angle between the camera 502 and the LED wall 505 is steep, the imaging is performed with pan focus, and the pitch width of the LED panel 506 is wide, the moire generation frequency is high.

Moreover, as described above, the generation degree of moire can be determined by the distance and the angle between the camera 502 and the LED wall 505, the pattern of clothing of the performer 510, or the like.

In step S202, the information processing device 70 determines the generation degree of such moire and sets a frame on which the moire handling processing is performed. Then, the information processing device 70 performs the processing from step S203 to step S207 for each set frame.

In step S203, the information processing device 70 specifies one of the frames set to perform the moire handling processing as a processing target.

In step S204, the information processing device 70 acquires the mask MK for the specified frame.

In step S205, the information processing device 70 specifies the background area ARb of the frame using the mask MK.

In step S206, the information processing device 70 performs the moire handling processing for the background area ARb. For example, processing as in the examples of Figs. 17, 18, and 19 is performed.

Then, in step S207, the information processing device 70 records the video data subjected to the moire handling processing on the recording medium. For example, it is recorded as one frame of the edited video content.

In step S208, presence of an unprocessed frame is confirmed, and if present, the process returns to step S203 to specify one of the unprocessed frames as a processing target, and the processing of steps S204 to S207 is similarly performed.

When the above processing is terminated for all the frames for which the moire handling processing is set to be performed, the processing of Fig. 25 is terminated.

For example, in this manner, it is possible to distinguish the background area ARb and the foreground area ARf by using the mask MK at the stage of the post-production ST3 and perform the moire handling processing.

Note that, in a case where the video Pswir of the SWIR camera is recorded together with the captured video vC (the video Prgb of the RGB camera), a processing example of generating the mask MK at the stage of step S204 in Fig. 25 is also considered.

Furthermore, it is not limited to the example of Fig. 25, and the video correction processing of the background area ARb, the moire reduction processing of the foreground area ARf, and the video correction processing of the foreground area ARf can be performed at the stage of the post-production ST3.

Furthermore, after video processing such as the moire reduction processing and the video correction processing is performed on one or both of the background area ARb and the foreground area ARf in substantially real time at the time of imaging as in the first, second, and third embodiments, these pieces of video processing may be performed in the post-production ST3.

For example, also in each step S105 in Figs. 16, 20, and 23, by recording the imaging information, the mask MK, or the video Pswir in association with the captured video vC (the processed captured video vCR), it is possible to perform the video processing again in the post-production ST3.

### <8. Configuration example of display panel for background video>

Although the example of the LED wall 505 has been described with reference to Fig. 1, another example of the display panel of the background video vB will be described. Various configurations are conceivable for the display panel of the background video vB.

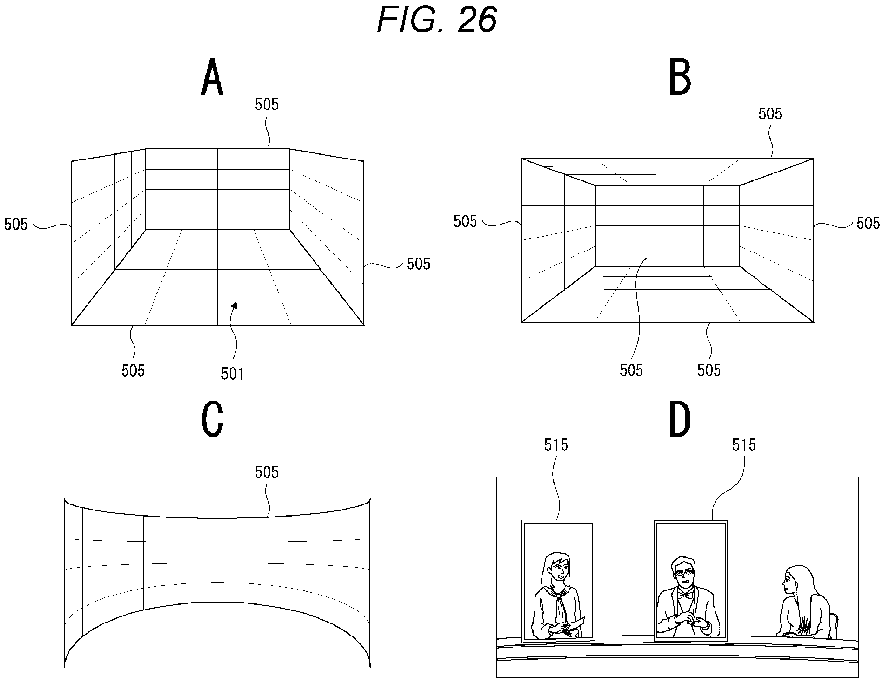

Fig. 26A is an example in which the LED wall 505 is provided including the floor portion in the performance area 501. In this case, the LED wall 505 is provided on each of the back surface, the left side surface, the right side surface, and the floor surface.

Fig. 26B illustrates an example in which the LED wall 505 is provided on each of the top surface, the back surface, the left side surface, the right side surface, and the floor surface so as to surround the performance area 501 on the box.

Fig. 26C illustrates an example in which the LED wall 505 having a cylindrical inner wall shape is provided.

The LED wall 505 has been described as the display device, and an example has been described in which the display video to be displayed is the background video obtained by rendering the 3D background data. In this case, the background area ARb as an example of a display video area and the foreground area ARf as an object video area in the captured video vC can be separated to perform video processing.

The technology of the present disclosure can be applied not only to such a relationship between the background and the foreground.

For example, Fig. 26D illustrates an example in which a display device 515 is provided side by side with another subject. For example, in a television broadcasting studio or the like, a remote performer is displayed on the display device 515 and imaged together with the performer actually in the studio.

In this case, there is no clear distinction between the background and the foreground, but the captured video includes a mixture of the display video and the object video. Even in such a case, since the display video area and the object video area can be separated using the mask MK, the processing of the embodiment can be similarly applied.

Although various examples other than this are conceivable, in a case where the captured video includes the video of the display device and the video of the object actually present, the technology of the present disclosure can be applied in a case where various types of video processing are performed by distinguishing these areas.

### <9. Summary and modification example>

According to the above embodiments, the following effects can be obtained.

The information processing device 70 of the embodiment includes the video processing unit 85 that performs, on the captured video vC obtained by capturing a display video (for example, the background video vB) of the display device and an object, video processing of a display video area (for example, the background area ARb) determined using the mask MK or video processing of an object video area (for example, the foreground area ARf) determined using the mask MK. The mask MK is information for separating the display video and the object video in the captured video vC.

Consequently, in a case that a video displayed on the display device and a real object are simultaneously imaged, video processing can separately be performed on the area of the display video and the area of the object video included in the captured video. Therefore, processing corresponding to a difference between the display video and the real object can be appropriately performed in the video.

In the first, second, third, and fourth embodiments, the LED wall 505 has been described as the display device, and an example has been described in which a display video displayed is the background video vB obtained by rendering 3D background data. Furthermore, the captured video vC is a video obtained by imaging an object, for example, the performer 510 or an article with the LED wall 505 displaying the background video vB on a background.

By capturing the background video vB displayed on the LED wall 505, each frame of the captured video vC includes the background area ARb in which the background video vB is captured and the foreground area ARf in which objects such as the performer 510 and an object are captured. Since the background area ARb and the foreground area ARf are different from each other in terms that objects being imaged are a display video and a real object, different influences occur on the video. Accordingly, the background area ARb and the foreground area ARf are divided using the mask MK for each frame of the captured video vC, and the video processing is individually performed for one or both of them. Thus, it is possible to individually respond to an event on the video caused by the difference in imaged objects and perform correction of the video or the like. For example, artifacts occurring only in the background area ARb in the captured video vC can be eliminated. Therefore, the problem of the video produced as the virtual production can be solved, and the video production utilizing the advantage of the virtual production can be promoted.

In the embodiment, an example has been described in which the video processing unit 85 performs processing of reducing artifacts as the video processing of the background area ARb in the captured video vC (see Fig. 16) .

As the artifact, in addition to the moire illustrated in the first embodiment, various events that require correction and reduction, such as noise on a video and unintended changes in color and luminance, can be considered. Thus, correction of the background area ARb or the like can be performed without affecting the foreground area ARf.

In the first embodiment, an example has been described in which the video processing unit 85 performs moire reduction processing as the video processing of the background area ARb in the captured video vC (see Fig. 16) .

By capturing the background video vB displayed on the LED wall 505, the moire M may occur in the background area ARb of the captured video vC. Therefore, the moire reduction processing is performed after the background area ARb is specified. Thus, the moire can be eliminated or reduced, and the foreground area ARf can be prevented from being affected by the moire reduction processing. For example, even if moire is reduced in the background area ARb by LPF processing or the like, a high definition image can be maintained in the foreground area ARf without performing the LPF processing or the like.

In the first embodiment, an example has been described in which moire generation degree determination in the background area ARb in the captured video vC is performed, and the moire reduction processing is performed according to a determination result, as the video processing of the background area ARb (see Figs. 17 and 18).

For each frame of the captured video vC, the moire reduction processing is performed in a case where the moire M at a level requiring reduction processing occurs in the background area ARb, so that the moire reduction processing can be performed as necessary.

In the first embodiment, an example has been described in which moire generation degree determination in the background area ARb in the captured video vC is performed, processing intensity is set according to a determination result, and moire reduction processing is performed, as the video processing of the background area ARb (see Figs. 18 and 19).

By setting the intensity of the moire reduction processing, for example, the intensity of the degree of blurring according to the degree of moire M occurring in the background area ARb, it is possible to effectively reduce the moire.

In the first embodiment, an example has been described in which the moire generation degree determination is performed by comparing the captured video vC with the background video vB (see step S141 and the like in Fig. 17).

By comparing a frame as the background video vB displayed on the LED wall 505 with a frame of the captured video vC obtained by capturing the background video vB of the frame and acquiring a difference, the occurrence and degree of moire can be determined. Thus, the intensity of the moire reduction processing can be appropriately set.

In the first embodiment, an example has been described in which the moire generation degree determination is performed on the basis of imaging information of the camera 502 at the time of imaging or imaging environment information of an imaging facility (see step S141 and the like in Fig. 17).

It is possible to determine whether or not moire is likely to occur by referring to the pitch width of the LED panel 506 on the LED wall 505 acquired as the imaging environment information and the information of the camera 502 at the time of imaging acquired as the imaging information, for example, a camera position, a camera direction, an angle of view, and the like at the time of imaging. That is, the occurrence and degree of moire can be estimated. Thus, the intensity of the moire reduction processing can be appropriately set.

In the second embodiment, an example has been described in which the video processing unit 85 performs video correction processing of the background area ARb as the video processing of the background area ARb in the captured video vC (see Fig. 20).

By capturing the background video vB displayed on the LED wall 505, an image defect may occur in the background area ARb of the captured video vC, or a bounding may occur due to a quantization error. By performing the video correction processing on the background area ARb in such a case, the video quality of the background area ARb can be improved.

In the third embodiment, an example has been described in which the video processing unit 85 performs moire reduction processing as the video processing of the foreground area ARf in the captured video vC (see Fig. 23) .

The moire M may occur in the foreground area ARf of the captured video vC. Accordingly, the moire reduction processing is performed after the foreground area ARf is specified. Thus, the moire can be eliminated or reduced, and the quality of the video of the foreground area ARf can be improved.

In the third embodiment, an example has been described in which determination processing for clothing of a subject is performed, and moire reduction processing is performed according to a determination result, as the video processing of the foreground area ARf in the captured video vC (see steps S170, S171, and S172 in Fig. 23) .

The moire M may occur in the foreground area ARf of the captured video vC, but the moire M is likely to occur particularly depending on a pattern of the clothing. Accordingly, it is an effective process to determine the pattern of the clothing, and determine whether or not to execute the moire reduction processing or set the processing intensity according to the determination.

In the third embodiment, an example has been described in which video correction processing of the foreground area ARf is performed as the video processing of the foreground area ARf in the captured video vC (see step S180 in Fig. 23).

For example, luminance processing and color processing are performed as the video correction processing. Depending on the luminance, color, or balance with illumination of the background video vB displayed on the LED wall 505, the subject may become dark or may become too bright. Accordingly, correction processing of luminance and hue is performed. Thus, it is possible to correct the background video vB to a video with well-balanced luminance and hue.

In the first, second, and third embodiments, at the time of imaging, the video processing unit 85 performs the video processing of the background area ARb or the video processing of the foreground area ARf for each frame of the captured video vC.

For example, the rendering engine 520 determines the background area ARb and the foreground area ARf using the mask MK for each frame of the captured video vC in substantially real time while imaging by the camera 502 is performed, and performs video processing for either or both of them. Thus, the captured video vC to be recorded can be a video without moire or defect (processed captured video vCR). Therefore, a high-quality captured video vC can be obtained at the stage of the production ST2.

In the first, second, and third embodiments, at the time of imaging, the video processing unit 85 generates the mask MK for each frame of the captured video, and determines the background area ARb and the foreground area ARf in the frame (see step S102 in Figs. 16, 20, and 23) .

For example, the rendering engine 520 generates the mask MK using the video Pswir for each frame of the captured video vC while imaging by the camera 502 is performed. Thus, the background area ARb and the foreground area ARf can be appropriately determined for each frame.

Note that, in a case where the mask MK is generated by the camera 502 as illustrated in Fig. 15, the rendering engine 520 can use the mask MK transmitted from the camera 502. In this case, it is not necessary to generate the mask MK in step S102 in Figs. 16, 20, 23, and 24, and the processing load of the rendering engine 520 is reduced.

In the fourth embodiment, an example has been described in which the video processing unit 85 reads each frame of the captured video vC from a recording medium, reads the mask MK recorded corresponding to each frame from the recording medium, and performs the video processing of the background area ARb or the video processing of the foreground area ARf for each frame of the captured video vC (see Fig. 25).

For example, the mask MK is recorded as metadata in association with the captured video vC at the time of imaging. Then, at the time point after imaging, the captured video vC and the mask MK are read from the recording medium, the background area ARb and the foreground area ARf are determined using the mask MK for each frame of the captured video vC, and video processing is performed for either or both of them. Thus, in the post-production ST3, it is possible to obtain a video without moire or defect (processed captured video vCR).

In the fourth embodiment, an example has been described in which the imaging information corresponding to each frame of the captured video vC is read from the recording medium, a frame to be a video processing target is determined on the basis of the imaging information, and the video processing of the background area ARb or the video processing of the foreground area ARf is performed for the frame determined to be the video processing target (see Fig. 25).

By reading the imaging information from the recording medium, it is possible to determine which frame is set as the video processing target. For example, in which frame the moire occurs can be estimated from the imaging information, and the estimated frame can be set as the video processing target. Thus, video processing for the background area ARb and the foreground area ARf can be efficiently performed.

In the embodiment, the mask MK is generated on the basis of the video Pswir obtained by the SWIR camera 52 that captures the same video as the captured video.

For example, the video captured by the SWIR camera having high sensitivity in a wide wavelength band from the visible light region to the near-infrared region (for example, from 400 nm to 1700 nm) can appropriately separate the object (particularly the person) from the background video vB in which the light source changes drastically. Thus, by generating the mask MK, the background area ARb and the foreground area ARf can be appropriately discriminated.

In the embodiment, the SWIR camera 52 is configured in such a manner that subject light is incident on the same optical axis as the RGB camera 51 that obtains the captured video vC obtained by capturing the display video (background video vB) and the object (see Figs. 14 and 15) .

For example, it is assumed that the camera 502 includes the RGB camera 51 that obtains the captured video vC and the SWIR camera 52 as coaxial cameras. Thus, a video having the same angle of view as the captured video vC can also be obtained by the SWIR camera 52. Therefore, the mask MK generated from the video of the SWIR camera 52 can be matched with the captured video vC captured by the RGB camera 51, and the background area ARb and the foreground area ARf can be appropriately separated.

The processing examples of the first, second, third, and fourth embodiments can be combined. That is, all or some of the processing examples of the first, second, third, and fourth embodiments can be combined and executed in the rendering engine 520 or the information processing device 70 used in the post-production ST3.

Processing examples of the first, second, third, and fourth embodiments can also be implemented by cloud computing. For example, in the production ST2, the functions of the rendering engine 520 and the asset server 530 may be implemented by the information processing device 70 as a cloud server. Furthermore, the processing as illustrated in Fig. 25 of the fourth embodiment in the post-production ST3 may also be implemented by the information processing device 70 as a cloud server.

Furthermore, although the video processing unit 85 in the rendering engine 520 in Fig. 8 has been described as an example of the video processing unit of the present technology, for example, a video processing unit may be provided in an information processing device other than the rendering engine 520, and the processing described in the embodiment may be performed. Alternatively, the camera 502 or the like may include a video processing unit to perform the processing described in the embodiment.

Furthermore, in the description of the embodiment, the SWIR camera 52 is used to generate the mask MK, but a camera other than the SWIR camera 52 may be used to generate the mask MK for specifying the region of a real subject.

For example, the depth of a subject is measured using a depth camera such as Kinect or LiDAR or a time of flight (ToF) sensor, and the subject is separated by a distance difference between the subject and the background LED, whereby the mask MK can be generated.

Furthermore, for example, the mask MK can be generated by separating a subject using the body temperature of a person using a thermographic camera.

The program of the embodiment is, for example, a program for causing a processor such as a CPU or a DSP, or a device including the processor to execute the processing of the video processing unit 85 described above.

That is, the program of the embodiment is a program for causing the information processing device 70 to execute, on a captured video obtained by capturing a display video (for example, the background video vB) of the display device and an object, video processing of a display video area (background area ARb) determined using the mask MK that separates the display video and the object video in the captured video vC, or video processing of an object video area (foreground area ARf) determined using the mask MK.

With such a program, the information processing device 70 that can be used for the production ST2 and the post-production ST3 described above can be implemented by various computer devices.

Such a program can be recorded in advance in an HDD as a recording medium built in a device such as a computer device, a ROM in a microcomputer having a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as what is called package software.

Furthermore, such a program can be installed from the removable recording medium into a personal computer or the like, or can be downloaded from a download site via a network such as a local area network (LAN) or the Internet.

Furthermore, such a program is suitable for providing the information processing device 70 of the embodiment in a wide range. For example, by downloading the program to a personal computer, a communication device, a portable terminal device such as a smartphone or a tablet, a mobile phone, a game device, a video device, a personal digital assistant (PDA), or the like, these devices can be caused to function as the information processing device 70 of the present disclosure.

Note that the effects described in the present specification are merely examples and are not limited, and other effects may be provided.

Note that the present technology can also have the following configurations.
(1) An information processing device including:
   a video processing unit that performs, on a captured video obtained by capturing a display video of a display device and an object,
   video processing of a display video area determined using mask information for separating a display video and an object video in the captured video, or video processing of an object video area determined using the mask information.
(2) The information processing device according to (1) above, in which
   a display video displayed on the display device is a background video obtained by rendering 3D background data, and
   the captured video is a video obtained by imaging an object with a display device displaying the background video on a background.
(3) The information processing device according to (1) or (2) above, in which
   the video processing unit performs processing of reducing artifacts as the video processing of the display video area in the captured video.
(4) The information processing device according to any one of (1) to (3) above, in which
   the video processing unit performs moire reduction processing as the video processing of the display video area in the captured video.
(5) The information processing device according to any one of (1) to (4) above, in which
   the video processing unit performs moire generation degree determination in the display video area, and performs moire reduction processing according on a determination result, as the video processing of the display video area in the captured video.
(6) The information processing device according to any one of (1) to (5) above, in which
   the video processing unit performs moire generation degree determination in the display video area, sets processing intensity according to a determination result, and performs moire reduction processing, as the video processing of the display video area in the captured video.
(7) The information processing device according to (5) or (6) above, in which
   the video processing unit performs the moire generation degree determination by comparing the captured video with the display video.
(8) The information processing device according to any one of (5) to (7) above, in which
   the video processing unit performs the moire generation degree determination on the basis of imaging information of a camera at time of imaging or imaging environment information of an imaging facility.
(9) The information processing device according to any one of (1) to (8) above, in which
   the video processing unit performs video correction processing of the display video area as the video processing of the display video area in the captured video.
(10) The information processing device according to any one of (1) to (9) above, in which
   the video processing unit performs moire reduction processing as the video processing of the object video area in the captured video.
(11) The information processing device according to any one of (1) to (10) above, in which
   the video processing unit performs determination processing for clothing of a subject, and performs moire reduction processing according to a determination result, as the video processing of the object video area in the captured video.
(12) The information processing device according to any one of (1) to (11) above, in which
   the video processing unit performs video correction processing of the object video area as the video processing of the object video area in the captured video.
(13) The information processing device according to any one of (1) to (12) above, in which
   at time of imaging, the video processing unit performs the video processing of the display video area or the video processing of the object video area for each frame of the captured video.
(14) The information processing device according to any one of (1) to (13) above, in which
   at time of imaging, the video processing unit generates the mask information for each frame of the captured video, and determines the display video area and the object video area in the frame.
(15) The information processing device according to any one of (1) to (12) above, in which
   the video processing unit reads each frame of the captured video from a recording medium, reads mask information recorded corresponding to each frame from the recording medium, and performs the video processing of the display video area or the video processing of the object video area for each frame of the captured video.
(16) The information processing device according to (15) above, in which
   the video processing unit reads imaging information corresponding to each frame of the captured video from the recording medium, determines a frame to be a video processing target on the basis of the imaging information, and performs the video processing of the display video area or the video processing of the object video area for the frame determined to be the video processing target.
(17) The information processing device according to any one of (1) to (16) above, in which
   the mask information is generated on the basis of a video obtained by an infrared short wavelength camera that captures a same video as the captured video.
(18) The information processing device according to (17) above, in which
   the infrared short wavelength camera is configured in such a manner that subject light is incident on a same optical axis as a camera that obtains the captured video obtained by capturing the display video and the object.
(19) A video processing method including:
   by an information processing device, performing, on a captured video obtained by capturing a display video of a display device and an object,
   video processing of a display video area determined using mask information for separating a display video and an object video in the captured video, or video processing of an object video area determined using the mask information.
(20) A program for causing an information processing device to execute:
   on a captured video obtained by capturing a display video of a display device and an object, video processing of a display video area determined using mask information for separating a display video and an object video in the captured video, or video processing of an object video area determined using the mask information.

### REFERENCE SIGNS LIST

- 70: Information processing device
- 71: CPU
- 85: Video processing unit
- 500: Imaging system
- 501: Performance area
- 502, 502a, 502b: Camera
- 503: Output monitor
- 505: LED wall
- 506: LED panel
- 520: Rendering engine
- 530: Asset server
- 540: Sync generator
- 550: Operation monitor
- 560: Camera tracker
- 570: LED processor
- 580: Light
- 581: Lighting controller
- 590: Display controller
- vB: Background video
- vBC: Capturing region video
- vC: Captured video
- vCR: Processed captured video
- MK: Mask
- ARb: Background area
- ARf: Foreground area

## Claims

1. An information processing device, comprising:
a video processing unit that performs, on a captured video obtained by capturing a display video of a display device and an object,
video processing of a display video area determined using mask information for separating a display video and an object video in the captured video, or video processing of an object video area determined using the mask information.

2. The information processing device according to claim 1, wherein
a display video displayed on the display device is a background video obtained by rendering 3D background data, and
the captured video is a video obtained by imaging an object with a display device displaying the background video on a background.

3. The information processing device according to claim 1, wherein
the video processing unit performs processing of reducing artifacts as the video processing of the display video area in the captured video.

4. The information processing device according to claim 1, wherein
the video processing unit performs moire reduction processing as the video processing of the display video area in the captured video.

5. The information processing device according to claim 1, wherein
the video processing unit performs moire generation degree determination in the display video area, and performs moire reduction processing according on a determination result, as the video processing of the display video area in the captured video.

6. The information processing device according to claim 1, wherein
the video processing unit performs moire generation degree determination in the display video area, sets processing intensity according to a determination result, and performs moire reduction processing, as the video processing of the display video area in the captured video.

7. The information processing device according to claim 5, wherein
the video processing unit performs the moire generation degree determination by comparing the captured video with the display video.

8. The information processing device according to claim 5, wherein
the video processing unit performs the moire generation degree determination on a basis of imaging information of a camera at time of imaging or imaging environment information of an imaging facility.

9. The information processing device according to claim 1, wherein
the video processing unit performs video correction processing of the display video area as the video processing of the display video area in the captured video.

10. The information processing device according to claim 1, wherein
the video processing unit performs moire reduction processing as the video processing of the object video area in the captured video.

11. The information processing device according to claim 1, wherein
the video processing unit performs determination processing for clothing of a subject, and performs moire reduction processing according to a determination result, as the video processing of the object video area in the captured video.

12. The information processing device according to claim 1, wherein
the video processing unit performs video correction processing of the object video area as the video processing of the object video area in the captured video.

13. The information processing device according to claim 1, wherein
at time of imaging, the video processing unit performs the video processing of the display video area or the video processing of the object video area for each frame of the captured video.

14. The information processing device according to claim 1, wherein
at time of imaging, the video processing unit generates the mask information for each frame of the captured video, and determines the display video area and the object video area in the frame.

15. The information processing device according to claim 1, wherein
the video processing unit reads each frame of the captured video from a recording medium, reads mask information recorded corresponding to each frame from the recording medium, and performs the video processing of the display video area or the video processing of the object video area for each frame of the captured video.

16. The information processing device according to claim 15, wherein
the video processing unit reads imaging information corresponding to each frame of the captured video from the recording medium, determines a frame to be a video processing target on a basis of the imaging information, and performs the video processing of the display video area or the video processing of the object video area for the frame determined to be the video processing target.

17. The information processing device according to claim 1, wherein
the mask information is generated on a basis of a video obtained by an infrared short wavelength camera that captures a same video as the captured video.

18. The information processing device according to claim 17, wherein
the infrared short wavelength camera is configured in such a manner that subject light is incident on a same optical axis as a camera that obtains the captured video obtained by capturing the display video and the object.

19. A video processing method, comprising:
by an information processing device, performing, on a captured video obtained by capturing a display video of a display device and an object,
video processing of a display video area determined using mask information for separating a display video and an object video in the captured video, or video processing of an object video area determined using the mask information.

20. A program for causing an information processing device to execute:
on a captured video obtained by capturing a display video of a display device and an object, video processing of a display video area determined using mask information for separating a display video and an object video in the captured video, or video processing of an object video area determined using the mask information.
